# FASCICULE DE BREVET EUROPEEN

(11) **EP 1 643 344 B1**
(45) Date de publication et mention de la délivrance du brevet: **27.07.2016**
(21) Numéro de dépôt: 05292049.3
(22) Date de dépôt: 03.10.2005
(51) Int. Cl.: G06F 1/00

(54) **Procédé de gestion des licenses des logiciels exécutées sur des plateformes partionnables d'un système à processeurs multiples**
Verfahren zur Verwaltung von Softwarelizenzen, indem die Software auf aufteilbaren Plattformen von einem Multiprozessorsystem durchgeführt wird
Method for managing licenses of software carried out on partitionable platforms of a multiprocessor system

(30) Priorité: 01.10.2004 FR 0410377
(43) Date de publication de la demande: 05.04.2006
(73) Titulaire: Bull SAS, 78340 Les Clayes-sous-Bois (FR)
(72) Inventeur: Bouchet, Alain, 95840 Villiers Adam (FR)
(74) Mandataire: Pellegrini, Marie Claude

(56) Documents cités:
- EP-A- 1 164 475
- WO-A-01/16674
- GB-A- 2 316 503
- US-A- 5 742 757
- US-A1- 2003 126 456

## Description

La présente invention concerne le domaine de l'informatique et en particulier des systèmes à processeurs multiples. Par exemple, les constructeurs de matériel informatique développent aujourd'hui des centrales serveurs composées de plusieurs serveurs interconnectés, consistant en des plateformes multicellulaires, à processeurs multiples, se partageant les tâches à effectuer au sein du système qu'ils constituent.

Certains systèmes à processeurs multiples connus de l'art antérieur sont statiques et non partitionnables, c'est-à-dire qu'ils ont, du point de vue logiciel, une structure immuable qui dépend des éléments physiques de la plateforme matérielle. Dans ces systèmes statiques, certains systèmes d'exploitation ou certaines applications utilisent le numéro de série du système sur lequel ils sont exécutés, comme donnée d'entrée dans leurs mécanismes de gestion de licences. Ce numéro de série permet, d'une part, de garantir que le système d'exploitation ou l'application sont exécutés sur un système légal (pour lequel la licence a été vendue) et, d'autre part, de garantir l'unicité de l'identification et donc de l'utilisation de la licence vendue.

Il est connu de l'art antérieur, notamment par les demandes de brevet WO 01/16674 A1 et EP 1 164 475 A2, des procédés de gestion de l'exécution d'activités au sein de système informatique consistant à associer les différentes activités au matériel sur lequel elles sont installées. Ces solutions permettent de recueillir les informations concernant les ressources matérielles du système et de les associer avec les informations de licence concernant les activités à exécuter sur les ressources matérielles. Cependant, ces solutions présentent l'inconvénient de ne pas permettre une gestion flexible des licences car celles-ci sont associées à une ressource matérielle du système et elles ne peuvent pas servir à l'exécution de l'activité sur une autre ressource matérielle que celle sur laquelle elle a été installée.

A l'heure actuelle, un des axes d'évolution des matériels et/ou des systèmes informatiques concerne la mise en oeuvre d'une flexibilité maximale de ressources informatiques configurables, au profit d'un utilisateur, disposant localement de ressources informatiques notablement plus réduites.

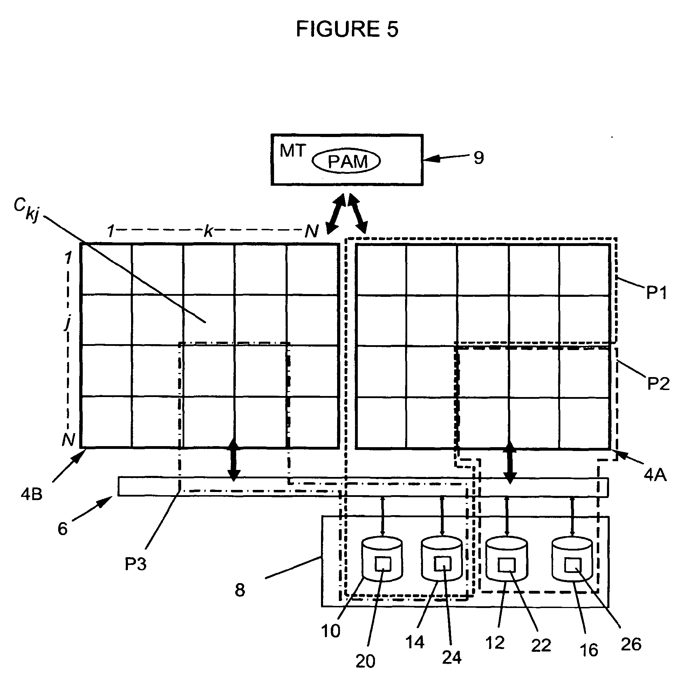

Il est connu de l'art antérieur, notamment par les demandes de brevet européen EP 1324176, EP 1335287 et EP 1341087, déposées par la demanderesse, des systèmes informatiques à processeurs multiples qui sont configurables et reconfigurables par simple commande d'un opérateur, grâce à un outil d'administration (MT) du système. Ces systèmes, du type de celui représenté sur la figure 5, sont constitués de sous-systèmes (4A, 4B) consistant chacun en une plateforme multicellulaire de ressources informatiques. Ces plateformes multicellulaires sont composées de cellules de traitement de données (ou cellules de calcul, Cₖⱼ), interconnectées entre elles et comportant chacune au moins une unité centrale de traitement (à plusieurs processeurs) et des mémoires de travail locales, dont au moins une mémoire non volatile, dite mémoire NVRAM. Les mémoires de travail des cellules comportent notamment un programme d'amorçage ou programme BIOS (Basic Input/Output System) et un chemin d'accès à un disque système, situé parmi des ressources communes du système. Au démarrage d'une cellule ou d'un groupe de cellules, le chemin d'accès est utilisé par le programme BIOS pour connaître la localisation du disque système contenant un système d'exploitation à charger et à lancer, pour gérer les ressources matérielles de la cellule ou du groupe de cellules de calcul. Les ressources communes du système consistent en des éléments périphériques, tels que, par exemple, des mémoires de masse, dont notamment des disques système et des disques de données. Les disques de données comportent des logiciels d'application ou applicatifs composés de programmes informatiques à exécuter et/ou de données à traiter. Pour assurer une flexibilité maximale de ces systèmes, les ressources communes sont raccordées à chaque plateforme multicellulaire (4A, 4B) par des moyens adressables d'interconnexion (6), par exemple, conformément à une architecture SAN (Storage Area Network). Ces moyens d'interconnexion (6) sont destinés à permettre l'accès aux ressources communes à partir de n'importe quelle cellule ou groupe de cellules. Ainsi, un disque de données peut être accédé à partir d'une cellule (Cₖⱼ) dans une configuration donnée des plateformes (4A, 4B), puis ultérieurement par une cellule (Cₖⱼ₊₁) dans le cadre d'une configuration différente. De tels moyens d'interconnexion (6) sont donc aptes à permettre à l'ensemble des cellules de la plateforme d'accéder aux ressources communes sans qu'il soit pour cela nécessaire d'effectuer une quelconque opération de recâblage. Les plateformes multicellulaires (ou sous-systèmes) sont dites partitionnables car elles peuvent être divisées en des partitions, qui consistent en une ou plusieurs cellule(s) de calcul à processeurs multiples. Les systèmes informatiques configurables ou reconfigurables comportent également un outil d'administration (MT) permettant à un utilisateur de regrouper les ressources informatiques matérielles en des périmètres de ressources informatiques (P1, P2, ... Pi) destinés à exécuter des activités d'exploitation (A1, A2, ... Ai). Chaque périmètre (Pi) est formé par une partition (un groupe de cellules de calcul) et une partie des ressources communes, telles qu'au moins un disque système et éventuellement un disque de données. Chaque périmètre informatique est ainsi géré par un système d'exploitation spécifique multiprocesseur installé sur un disque système des ressources communes du système. En général, une activité d'exploitation correspond à une application nécessitant une puissance de calcul spécifique, en fonction du type et du volume de données traitées par cette application, cette puissance conditionnant la configuration à partir d'un outil (9) d'administration, par un utilisateur, d'un périmètre informatique (Pi), en vue de l'exécution de l'activité d'exploitation. Le terme "activité d'exploitation" désigne l'ensemble des moyens logiciels nécessaires pour mettre en oeuvre une fonction qu'un utilisateur du système veut réaliser. Des exemples de telles fonctions sont par exemple l'établissement de feuilles de paie ou la génération de listes de clients à contacter. Une activité comporte donc au moins un système d'exploitation apte à gérer les ressources informatiques matérielles d'un sous-système. La fonction souhaitée par l'utilisateur n'étant généralement pas remplie par le système d'exploitation à lui seul, une activité d'exploitation comporte communément, en plus, un ou plusieurs logiciels d'application destinés à être exécutés sur le système d'exploitation pour réaliser la ou les fonctions souhaitées par l'utilisateur. L'outil (9) d'administration contrôlant la mise sous tension des différents éléments du système et ne nécessitant généralement pas autant de ressources informatiques que les activités d'exploitation exécutées sur de tels systèmes, il peut avantageusement être constitué, par exemple, par un micro-ordinateur connecté en réseau local aux sous-systèmes constitutifs du système à plateformes multicellulaires. Lorsque deux périmètres partagent des mêmes ressources matérielles communes, telles qu'un même disque système ou une même cellule d'une plateforme, ils doivent être configurés pour être utilisés successivement dans le système. Dans le cas contraire, ils peuvent être utilisés simultanément dans le système.

Par exemple, sur la figure 5, trois périmètres P1, P2 et P3 destinés à exécuter une activité A1 ont été configurés, dans un système comportant deux sous-systèmes (4A et 4B) de plateformes multicellulaires, grâce à un logiciel d'administration PAM (« Platform Administration and Maintainability software », selon la terminologie anglaise) exécuté sur un outil (9) d'administration MT (« Management Tool », selon la terminologie anglaise). Le périmètre P1, délimité par une ligne en pointillés courts, comporte un premier groupe de quatorze cellules d'une première plateforme multicellulaire (4A), un disque de données (10) et un disque système (14). Le périmètre P2, délimité par une ligne en pointillés longs comporte un second groupe de six cellules de la première plateforme multicellulaire (4A), distinct du premier groupe de cellules, un disque de données (12) et un disque système (16). Le périmètre P3, délimité par une ligne en traits mixtes, comporte un groupe de quatre cellules de la deuxième plateforme multicellulaire (4B) et les même disques que ceux du périmètres P1 (10 et 14). Les ressources communes (8) comportent un disque de données (10) contenant un logiciel d'application (20), un disque système (14) contenant un système d'exploitation (24), un disque de données (12) contenant un logiciel d'application (22) et un disque système (16) contenant un système d'exploitation (26). Une activité d'exploitation A1 peut être supportée ici, par exemple, par la combinaison du logiciel 20 avec le système d'exploitation 24 et être exécutée successivement sur les périmètres P1 et P3, ou par la combinaison du logiciel 22 avec le système d'exploitation 26 et être exécutée sur le périmètre P2.

De tels systèmes correspondent à des systèmes ou machines désignées habituellement sous le terme de machines à partition. Ils permettent normalement d'installer et d'exécuter simultanément ou successivement des activités d'exploitation Ai différentes dans différents périmètres de la plateforme. Toutefois, ces systèmes ne permettaient pas à un utilisateur de redémarrer la même activité dans un périmètre différent de celui dans lequel elle était initialement exécutée, sans réinstallation ou manipulation physique, tout en conservant en outre le contexte d'exécution de l'activité d'exploitation. En effet, le contexte d'exécution de l'activité d'exploitation, contenant par exemple les différentes variables d'environnement nécessaires au démarrage ou redémarrage de l'activité d'exploitation, est sauvegardé, au moins en partie, dans les mémoires de travail locales du périmètre. Le contexte d'exécution d'une activité d'exploitation concerne, par exemple, les paramètres d'horloge locale du périmètre sur lequel l'activité était initialement exécutée, le chemin d'accès au disque système nécessaire à l'exécution de l'activité ou un journal personnel d'évènements, dans lequel des événements survenus lors du fonctionnement de la cellule ou d'un groupe de cellules sont enregistrés. Ces événements peuvent être, par exemple, des incidents matériels ou des alarmes survenus lors du fonctionnement de la cellule ou encore des événements enregistrés par un système d'exploitation, lors de son exécution sur cette cellule. Ce journal d'événements est également connu sous l'acronyme SEL (« System Event Log », selon la terminologie anglaise). Ainsi, par exemple, si l'utilisateur souhaite redémarrer l'activité A2, non pas dans le périmètre P1, mais dans le périmètre P2, les informations enregistrées dans le journal d'événements par l'activité A2, lors de son exécution sur le périmètre P1, sont perdues. En effet, le journal d'événements du périmètre P1 est enregistré dans les mémoires de travail locales de ce périmètre P1, et n'est pas accessible à partir du périmètre P2. Cette perte d'informations, lors du transfert d'une activité d'un périmètre d'origine vers un périmètre de destination, peut conduire à un dysfonctionnement de cette activité lorsqu'elle est exécutée dans son nouveau périmètre.

La demande de brevet européen EP 1324176 concerne un procédé et un système de sauvegarde de l'horloge locale d'un périmètre informatique, configuré sur une plateforme multicellulaire de ressources informatiques. Cette demande de brevet enseigne de transférer les paramètres d'horloge d'un périmètre sur lequel est exécutée une activité vers un périmètre sur lequel cette activité va être redémarrée pour permettre la poursuite de cette activité sans perte d'informations due à une erreur de reconnaissance du contexte d'exécution. Chacune des cellules (Cₖⱼ) des plateformes multicellulaires comportent un composant matériel local susceptible de délivrer un signal d'horloge local. L'invention consiste à calculer et mémoriser, pour chaque activité exécutée sur les différents périmètres du système, des paramètres relatifs aux décalages des horloges des différents périmètres par rapport à une horloge de référence absolue. Lors du rechargement de l'activité d'exploitation pour poursuite d'exécution sur un périmètre informatique suivant, distinct du périmètre informatique courant et auquel est associée une horloge locale suivante, distincte de l'horloge locale courante associée au périmètre informatique courant, il consiste à recalculer les paramètres de gestion de l'heure de l'activité d'exploitation à partir du paramètre de décalage temporel des paramètres de gestion de l'heure vis-à-vis de l'horloge de référence absolue et à actualiser l'horloge locale suivante distincte associée à ce périmètre informatique suivant distinct, préalablement au lancement de ladite activité d'exploitation pour poursuite d'exécution.

La demande de brevet européen EP1335287 concerne un procédé et un système de mise à jour automatique d'un chemin d'ccès au disque système d'un périmètre matériel de ressources informatiques lors du lancement d'une activité d'exploitation sur ce périmètre. L'invention consiste à sauvegarder dans une mémoire, lors de l'installation d'un nouveau disque système, une partie basse du chemin d'accès au nouveau disque système dans une liste de chemins d'accès, puis, à l'occasion de la définition de l'activité d'exploitation, à associer à cette activité la partie basse enregistrée dans la liste de chemins d'accès et, à l'occasion du lancement de l'activité sur un périmètre, à actualiser automatiquement le chemin d'accès contenu dans la mémoire de travail de ce périmètre, en combinant la partie haute du chemin d'accès de ce périmètre avec la partie basse du chemin d'accès associée à cette activité lors de sa définition.

La demande de brevet européen EP1341087 concerne un procédé et un système de gestion d'un journal personnel d'événements contenant des événements enregistrés par une activité d'exploitation exécutée sur un périmètre de ressources informatiques configuré sur une plateforme informatique multicellulaire. L'invention consiste à enregistrer, lors de la sauvegarde d'un événement par une activité, dans un journal commun d'événements, l'événement associé à un identificateur de l'activité qui sauvegarde l'événement, puis, avant la consultation par une activité de son journal personnel d'évènements, à reconstruire le journal personnel d'événements à partir du journal commun d'évènements, en sélectionnant, dans le journal commun d'évènements, les seuls événements associés à l'identificateur de cette activité pour les inclure dans le journal personnel d'événements reconstruit pour cette activité.

Les systèmes à processeurs multiples décrits dans ces trois demandes de brevets sont flexibles et partitionnables. Ces systèmes sont partageables en sous-systèmes matériels considérés comme indépendants du point de vue logiciel, mais dont les frontières peuvent évoluer dans le temps par simple commande opérateur. Ils sont également flexibles, en ce sens qu'une activité installée sur une des partitions d'un sous-système doit pouvoir, sans intervention physique, être redémarrée dans une autre partition du même sous-système ou dans une partition d'une autre sous-système contrôlé par le même logiciel d'administration. Cependant, ce transfert d'activité pose un problème de gestion des licences des logiciels nécessaires à l'exécution des activités sur les différents périmètres du système. Dans ces systèmes flexibles et partitionnables, chaque sous-système possède un numéro de série différent. Le déplacement d'une activité d'un périmètre, contenant des cellules d'un sous-système , vers un autre périmètre, contenant des cellules d'un autre sous-système , va donc bloquer le mécanisme de gestion des licences qui ne retrouve pas le numéro de série utilisé initialement pour le calcul des licences. Chaque partition d'un même sous-système obtient le même numéro de série du sous-système. Un périmètre du système hérite donc du numéro de série du sous-système auquel appartiennent les cellules du périmètre. Le nombre de partitions dans un sous-système et les frontières entre ces partitions étant dynamiquement variables, il n'est pas possible d'attribuer à chaque partition un numéro de série qui lui soit propre. Une activité dont la licence a été calculée à partir du numéro de série d'un sous-système , pour être exécutée dans un périmètre, pourra donc impunément être activée dans chacun des périmètres dont les cellules correspondent à des partitions de ce même sous-système, ce qui viole la garantie d'unicité.

Dans ce contexte, il est donc intéressant de proposer un procédé de gestion des activités exécutées sur les périmètres configurés dans un système à processeurs multiples, en garantissant la légalité des sous-systèmes constitutifs du système et l'unicité de l'utilisation des licences.

La présente invention a pour but de pallier certains inconvénients de l'art antérieur en proposant un procédé permettant une gestion flexible d'activités multiples sur des plateformes matérielles multicellulaires d'un système à processeurs multiples, partitionnable en partitions dans des sous-systèmes à plateforme multicellulaire constitutifs du système.

Ce but est atteint par un procédé de gestion d'activités multiples exécutées sur au moins un périmètre de ressources informatiques matérielles configuré sur au moins une plate-forme informatique multicellulaire d'un système à processeurs multiples, chaque activité d'exploitation contenant au moins un système d'exploitation apte à gérer les ressources informatiques du périmètre sur lequel elle est destinée à être exécutée, et la plateforme informatique multicellulaire comportant plusieurs périmètres de ressources informatiques matérielles distincts activables successivement ou simultanément sur la plateforme, caractérisé en ce que le procédé comporte les étapes suivantes :
- identification d'une activité en cours d'initialisation sur un périmètre du système, par un outil d'administration du système, grâce à un numéro de série étendu, stocké dans des moyens de mémorisation de l'outil d'administration et comprenant, d'une part, un numéro de série d'un sous-système sur lequel l'exécution de l'activité est autorisée et, d'autre part, une extension du numéro de série, attribuée à l'activité (A1),
- authentification du numéro de série du sous-système comme appartenant au système et sur lequel l'exécution de l'activité est autorisée,
- vérification des numéros de séries étendus des activités en cours d'exécution sur les différents sous-systèmes constitutifs du système,
- enregistrement du numéro de série étendu, en tant que licence d'activité, dans des mémoires de travail des ressources informatiques matérielles du sous-système dans lequel est configuré le périmètre sur lequel l'activité est en cours d'initialisation.

Selon une autre particularité, suite à la réalisation des étapes du procédé, les activités nécessitant un mécanisme de gestion de licences requérant au moins un numéro de série effectuent une étape de vérification de l'authenticité de la licence d'activité, cette étape consistant en une comparaison, par les ressources informatiques matérielles du sous-système dans lequel est configuré le périmètre sur lequel l'activité est en cours d'initialisation, du numéro de série étendu, enregistré, en tant que licence d'activité, dans les mémoires de travail des ressources informatiques matérielles du sous-système dans lequel est configuré le périmètre sur lequel l'activité est en cours d'initialisation, avec le numéro de licence interne du logiciel, cette comparaison permettant soit l'exécution de l'activité en cas de concordance de ces deux licences, soit l'interruption de l'initialisation de l'activité en cas de discordance.

Selon une autre particularité, le procédé comporte une étape préalable d'attribution d'un numéro de série étendu à chacune des activités destinées à être exécutées sur des périmètres du système, grâce à des saisies de commandes, réalisées par un opérateur, sur des moyens de saisie et des moyens d'affichage de l'outil d'administration du système, ces commandes mettant en oeuvre les étapes suivantes :
- copie du numéro de série de chacun des sous-systèmes sur lesquels les activités sont destinées à être exécutées,
- sélection de l'un de ces numéros de série pour chacune des activités et attribution d'une extension à chacune des activités,
- ajout des extensions aux numéros de série sélectionnés pour obtenir des numéros de série étendus attribués à chacune des activités,
- enregistrement des numéros de série étendus, attribués à chacune des activités, dans une mémoire de configuration, stockée dans les moyens de mémorisation de l'outil d'administration du système, lors de l'installation de l'activité sur le système.

Selon une autre particularité, le procédé comporte une étape préalable de déclaration, auprès des fabricants de logiciels nécessitant un mécanisme de gestion de licences basé sur le principe des numéros de série pour l'exécution d'activités dans des systèmes, des numéros de série étendus attribués aux activités destinées à être exécutées dans des périmètres du système, les fabricants pouvant alors implémenter ces numéros déclarés dans le calcul des licences internes des logiciels, pour l'étape de vérification de l'authenticité des licences des activités.

Selon une autre particularité, le procédé comporte une étape préalable de configuration du système, grâce aux moyens de saisie et aux moyens d'affichage de l'outil d'administration du système, par saisie par un opérateur qui définit, grâce à un module de configuration de l'outil d'administration du système, les activités à exécuter sur les différents périmètres du système, l'initialisation d'au moins une activité pouvant alors se produire sur un périmètre comportant des ressources informatiques matérielles appartenant à un sous-système différent du sous-système correspondant au numéro de série étendu attribué à l'activité.

Selon une autre particularité, l'étape d'authentification du sous-système sur lequel l'exécution de l'activité est autorisée consiste en une comparaison, par un module d'authentification présent dans les moyens de traitement de l'outil d'administration du système, du numéro de série du sous-système identifié d'après le numéro de série étendu de l'activité, avec une liste de numéros de série des sous-systèmes constitutifs du système, cette liste de numéros de série des sous-systèmes étant stockée dans des moyens de mémorisation de l'outil d'administration du système et permettant, grâce à cette comparaison, soit l'interruption de l'initialisation de l'activité, lorsque le numéro de série du sous-système sur lequel cette activité est autorisée à être exécutée n'est pas présent dans cette liste, soit, dans le cas contraire, une poursuite de la réalisation du procédé.

Selon une autre particularité, l'étape de vérification des numéros de séries étendus des activités en cours d'exécution dans le système consiste en une comparaison, par un module de vérification des activités courantes présent dans les moyens de traitement de l'outil d'administration du système, du numéro de série étendu de l'activité en cours d'initialisation avec une pluralité de numéros de série étendus d'activités en cours d'exécution dans le système, cette pluralité permettant soit l'interruption de l'initialisation de l'activité, par les moyens de traitement de l'outil d'administration du système, lorsque le numéro de série étendu de l'activité en cours d'initialisation est déjà utilisé pour l'exécution d'une activité sur un des périmètres configurés sur le système, soit, dans le cas contraire, une poursuite de la réalisation du procédé.

Selon une autre particularité, le procédé est mis en oeuvre par un logiciel d'administration du système à processeurs multiples, exécuté sur les moyens de traitement de l'outil d'administration du système et gérant la configuration matérielle du système en établissant des périmètres dans des sous-systèmes constitutifs du système, en fonction des commandes d'un opérateur, saisies grâce aux moyens de saisie et aux moyens d'affichage de l'outil d'administration du système, ce logiciel d'administration permettant de contrôler, grâce à des cartes d'interfaces, l'exploitation des ressources informatiques matérielles des sous-systèmes constitutifs du système et de contrôler l'initialisation d'activités sur les périmètres configurés sur le système, grâce aux numéros de série étendus de ces activités.

Selon une autre particularité, l'étape d'enregistrement du numéro de série étendu en tant que licence d'activité, dans les mémoires de travail des ressources informatiques matérielles du sous-système dans lequel est configuré le périmètre sur lequel l'activité est en cours d'initialisation, consiste en une étape préalable de vérification de la nécessité d'une licence d'activité pour l'exécution de cette activité et, si elle le nécessite, en une étape de détermination de l'emplacement où doit être enregistré le numéro de série étendu en tant que licence d'activité, puis en l'enregistrement du numéro de série étendu, par un module d'enregistrement, dans une table d'interface d'accès aux ressources informatiques matérielles du sous-système, à l'emplacement déterminé correspondant soit à un champ spécifique, lorsque l'activité permet une définition d'une adresse pour la vérification de la licence, soit à un champ de la table d'interface d'accès aux ressources classiquement utilisé par les activités, dit champ standard, lorsque l'activité nécessite le remplacement du numéro de série du sous-système dans lequel est configuré le périmètre, par le numéro de série étendu de l'activité, dans ce champ standard de la table d'interface d'accès aux ressources informatiques matérielles du sous-système.

Selon une autre particularité, l'étape d'attribution de numéros de série étendus aux activités est associée à une création d'objets, dits « objets identité », par un module de création d'identité présent dans les moyens de traitement de l'outil d'administration du système, les variables de ces objets identité correspondant à des informations relatives à l'exécution de l'activité dans les périmètres configurés sur le système, telles que le nom de l'activité, la nécessité d'un mécanisme de gestion de licence et le numéro de série étendu attribué à l'activité, ainsi que l'emplacement où ce numéro de série étendu doit être enregistré avant l'exécution de l'activité, l'étape de configuration du système, réalisée grâce au module de configuration de l'outil d'administration du système, étant associée à la création d'objets dits « objets domaines » dont les variables correspondent à des informations relatives à la définition de périmètres et à des activités à exécuter sur chacun des périmètres configurés sur le système, ces objets identités et ces objets domaines étant enregistrés dans la mémoire de configuration stockée dans les moyens de mémorisation de l'outil d'administration du système.

Selon une autre particularité, l'étape d'authentification du sous-système sur lequel l'exécution de l'activité est autorisée peut également consister en une comparaison, par le module d'authentification, du numéro de série du sous-système identifié d'après le numéro de série étendu de l'activité, avec uniquement le numéro de série du sous-système sur lequel l'activité est en cours d'initialisation, cette comparaison empêcher empêchant l'exécution de l'activité sur un autre sous-système que celui initialement autorisé.

Un autre but de l'invention est de proposer un système possédant une plateforme matérielle partitionnable à processeurs multiples permettant la gestion de l'exécution d'activités multiples.

Ce but est atteint par un système de gestion de l'exécution d'activités multiples, comportant au moins un sous-système à processeurs multiples constituant une plateforme informatique multicellulaire de ressources matérielles, un outil d'administration du système comportant un module de configuration pour définir des périmètres de ressources informatiques matérielles et activer, simultanément ou successivement, ces périmètres sur la plateforme, chaque périmètre comportant une ou plusieurs cellules de calcul, des ressources communes comportant des moyens de stockage des activités, chaque activité contenant au moins un système d'exploitation apte à gérer les ressources informatiques du périmètre sur lequel elle est destinée à être exécutée, caractérisé en ce qu'il comporte :
- des moyens de mémorisation de l'outil d'administration du système stockant, d'une part, une liste de numéros de série correspondant chacun à un des sous-systèmes constitutifs du système et, d'autre part, une mémoire de configuration contenant une pluralité de numéros de série étendus comprenant, d'une part, un numéro de série (SNA) d'un sous-système (4A, 4B) sur lequel l'exécution (150) d'une activité (A1) est autorisée et, d'autre part, une extension du numéro de série, attribuée à l'activité (A1),,
- des moyens de traitement de l'outil d'administration du système comportant :
   - un module d'authentification de sous-systèmes, authentifiant les sous-systèmes sur lesquels des activités sont autorisées à être exécutées, d'après la liste des numéros de série des sous-systèmes constitutifs du système, stockée dans les moyens de mémorisation de l'outil d'administration,
   - un module de vérification des numéros de séries étendus des activités en cours d'exécution sur les périmètres configurés dans le système, d'après une pluralité de numéros de série étendus d'activités en cours d'utilisation dans le système, et
   - un module d'enregistrement des numéros de série étendus en tant que licences d'activités, dans des mémoires de travail des ressources informatiques matérielles du sous-système dans lequel est configuré le périmètre sur lequel l'activité est en cours d'initialisation. Selon une autre particularité, puis en sélectionnant, pour chacune de ces activités, l'un de ces numéros de série et en lui ajoutant une extension, pour obtenir un numéro de série étendu et en enregistrant les numéros de série étendus ainsi attribués à chacune des activités dans la mémoire de configuration stockée dans les moyens de mémorisation de l'outil d'administration du système.

Selon une autre particularité, l'outil d'administration du système comporte un module de configuration comportant des moyens de définir les activités à exécuter sur les différents périmètres du système, par des moyens d'initialisation d'au moins une activité sur un périmètre, ce périmètre pouvant comporter des ressources informatiques matérielles appartenant à un sous-système différent du sous-système correspondant au numéro de série étendu attribué à l'activité, grâce à des moyens de création d'objets dits « objets domaines » dont les objets domaine créés possèdent des variables correspondant à des informations relatives à la définition de périmètres et à des activités à exécuter sur chacun des périmètres configurés sur le système, le module de configuration comportant également des moyens de création d'objets, dits « objets identité », par un module de création d'identité, les variables de ces objets identité correspondant à des informations relatives à l'exécution de l'activité dans les périmètres configurés sur le système, telles que le nom de l'activité, la nécessité d'un mécanisme de gestion de licence et le numéro de série étendu attribué à l'activité, ainsi que l'emplacement où ce numéro de série étendu doit être enregistré avant l'exécution de l'activité, ces objets identités et ces objets domaines étant enregistrés dans la mémoire de configuration stockée dans les moyens de mémorisation de l'outil d'administration du système.

Selon une autre particularité, les ressources informatiques matérielles des sous-systèmes, dans lesquels sont configurés les périmètres sur lesquels les activités sont en cours d'initialisation, comportent des moyens d'accès à des tables d'interfaces stockées dans les mémoires de travail de ces ressources informatiques matérielles, les numéros de série étendus étant enregistrés en tant que licences d'activités, par le module d'enregistrement, dans ces tables d'interfaces, des moyens de comparaison de ces licences d'activités avec des numéros de licences internes des logiciels responsables de ces activités et des moyens d'autorisation de l'exécution de ces activités en cas de concordance entre ces licences d'activités et ces numéros de licences internes ou d'interruption de l'initialisation de l'activité en cas de discordance.

Selon une autre particularité, les moyens de traitement de l'outil d'administration du système exécutent un logiciel d'administration du système gérant la configuration matérielle du système en établissant des périmètres informatiques dans les sous-systèmes constitutifs du système, en fonction des commandes d'un opérateur, saisies grâce aux moyens de saisie et aux moyens d'affichage du système, ce logiciel d'administration permettant de contrôler, grâce à des cartes dlinterfaces standards, les accès aux ressources matérielles du système et de contrôler l'initialisation d'activités sur les périmètres du système, en contrôlant l'interopérabilité des différents modules et moyens du système.

Selon une autre particularité, les moyens de traitement l'outil d'administration du système comportent des moyens de vérification de la nécessité de mécanismes de gestion de licences pour chacune des activités et des moyens de détermination de l'emplacement où le numéro de série étendu doit être enregistré, ces moyens permettant l'enregistrement du numéro de série étendu en tant que licence d'activité, par le module d'enregistrement, à l'emplacement déterminé, dans les tables d'interface d'accès aux ressources matérielles, stockée dans les mémoires de travail des sous-systèmes dans lesquels sont configurés les périmètres sur lesquels les activités sont en cours d'initialisation.

Selon une autre particularité, le module d'authentification des sous-systèmes sur lesquels les activités sont autorisées à être exécutées, d'après la liste de numéros de série des sous-systèmes constitutifs du système comportent des moyens de comparer le numéro de série du sous-système sur lequel une activité est autorisée à être exécutée, identifié d'après le numéro de série étendu de l'activité, avec uniquement le numéro de série du sous-système sur lequel l'activité est en cours d'initialisation, de façon à empêcher l'exécution de l'activité sur un autre sous-système que celui initialement autorisé.

D'autres particularités et avantages de la présente invention apparaîtront plus clairement à la lecture de la description ci-après, faite en référence aux dessins annexés, dans lesquels :
- la figure 1 est une illustration schématique de l'architecture matérielle d'un système conforme à l'invention,
- la figure 2 représente l'initialisation d'une activité sur un système selon l'invention, et notamment la comparaison de licence interne de cette activité avec le numéro de série étendu enregistré dans les mémoires locales de travail des sous-systèmes,
- la figure 3 représente un schéma du procédé selon l'invention, tel qu'il serait mis en oeuvre dans le système de la figure 1,
- la figure 4 représente un schéma des étapes de configuration du système de la figure 1, préalables à la mise en oeuvre du procédé de la figure 3, et
- la figure 5 représente un schéma d'un système à plateformes multicellulaires, connu de l'art antérieur.

La figure 5 représente un exemple de système à processeurs multiples, comportant deux plateformes multicellulaires (4A et 4B) de ressources informatiques matérielles de 20 cellules (Cₖⱼ) de calcul chacune. Ces deux plateformes constituent des sous-systèmes (4A et 4B) du système et sont reliés, via des moyens (6) d'interconnexion, à des ressources communes (8) du système comportant, ici, à titre d'exemple, quatre mémoires de masse (10, 12, 14 et 16). L'exploitation des ressources communes (8) par les ressources informatiques matérielles des deux sous-systèmes (4A et 4B) du système est contrôlée par un outil (9) d'administration, par exemple, grâce à un logiciel d'administration (PAM, pour l'anglais « Platform Administration and Maintainability ») exécuté sur des moyens de traitement de cet outil (9) d'administration. Ainsi, trois périmètres informatiques (P1, P2 et P3) ont été représentés en lignes pointillées sur la figure 5, pour illustrer trois exemples de configurations du système obtenues grâce à l'outil (9) d'administration, pour permettre l'exécution d'une activité donnée à l'aide des informations (22 et 26) nécessaires à cette activité, stockées dans les mémoires de masse (12 et 16, respectivement) des ressources communes (8) et traitées par les cellules (Cₖⱼ) de calcul de ces différents périmètres (P1, P2 et P3) informatiques.

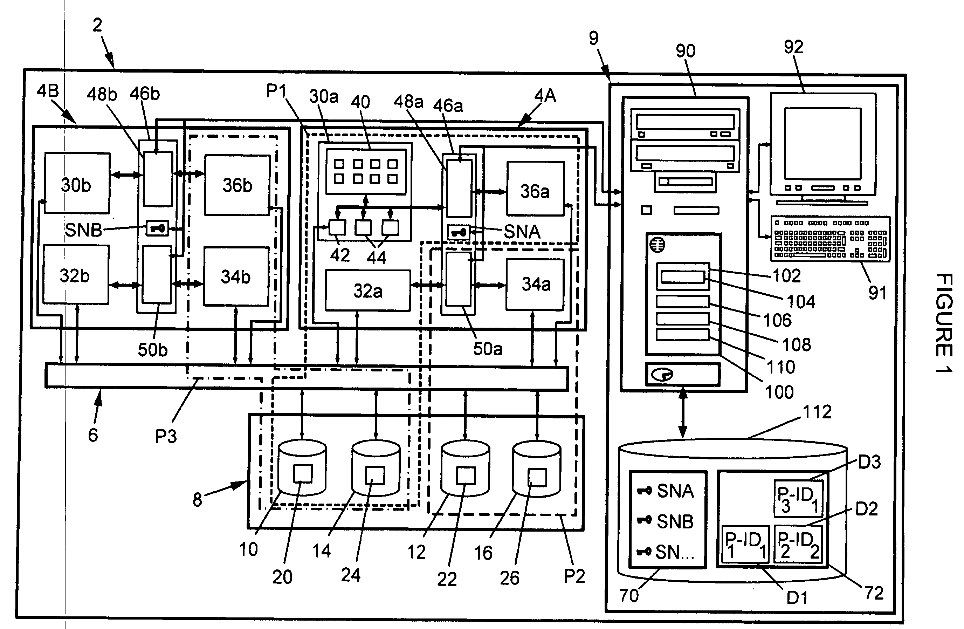

La figure 1 représente un exemple d'architecture d'un système (2) à processeurs multiples tel que celui représenté sur la figure 5, mais plus détaillé de façon à le rendre conforme à l'invention. On y retrouve deux sous-systèmes (4A et 4B), mais ceux-ci ne comportent ici que quatre cellules de calcul chacun (30a, 32a, 34a, 36a et 30b, 32b, 34b, 36b, respectivement). Les équivalents des périmètres (P1, P2 et P3) informatiques ont été représentés sur ce système (2) de deux plateformes à quatre cellules de calcul chacune. Ces cellules de calcul des deux plateformes multicellulaires (4A et 4B) de ce système (2) configurable de ressources informatiques sont raccordées, d'une part, à des ressources communes (8), par l'intermédiaire de moyens (6) d'interconnexion, et, d'autre part, à un outil (9) d'administration du système (2), via un ensemble de cartes (46a et 46b) d'interface.

Ici, à titre d'exemple, les ressources informatiques communes (8) comportent uniquement des mémoires de masse. Ces mémoires de masse se composent ici de deux disques de données (10) et (12) et de deux disques système (14) et (16). Les disques de données (10) et (12) sont destinés à contenir des logiciels d'application ainsi que des données à traiter. Ici, le disque de données (10) contient un logiciel d'application (20) et le disque de données (12) contient un logiciel d'application (22). Ces disques de données (10, 12) comportent également des données à traiter. Les logiciels (20, 22) sont par exemple des logiciels de gestion de bases de données ou des logiciels d'administration de ressources matérielles. Dans cet exemple, les disques système (14 et 16) comportent respectivement un système d'exploitation (24) et un système d'exploitation (26). Ces systèmes d'exploitation (24 et 26) sont aptes à gérer les ressources informatiques matérielles des deux sous-systèmes (4A et 4B). Ces systèmes d'exploitation sont, par exemple, des systèmes d'exploitation classiques tels que LINUX®, UNIX® ou Windows® et offrent des fonctionnalités d'installation de nouvelles activités sur la plateforme. A titre d'exemple, une première activité d'exploitation A1 est réalisée lorsque le logiciel (20) est exécuté sur le(s) processeur(s) utilisant le système d'exploitation (24). Cette activité A1 comporte donc le logiciel (20) et le système d'exploitation (24).

Les moyens (6) d'interconnexion sont aptes à raccorder l'une quelconque des cellules des plateformes (4A et 4B) à l'un quelconque des disques (10, 12, 14 et 16). Ainsi, grâce aux moyens (6) d'interconnexion, aucune opération de recâblage n'est nécessaire pour raccorder l'un quelconque des disques à l'une quelconque des cellules des plateformes (4A et 4B). Ces moyens (6) d'interconnexion sont par exemple un réseau dédié au stockage d'informations conforme à l'architecture SAN (Storage Area Network) et réalisé à partir de produits connus sous les termes de "Switchs Fiber Channel".

Chacun des deux sous-systèmes de plateformes multicellulaires (4A et 4B) est divisé en plusieurs cellules de calcul. Par exemple, la plateforme (4A) comporte quatre cellules (30a, 32a, 34a et 36a) de calcul identiques. Ainsi, seule la cellule 30a sera décrite en détail. Chacune des cellules est propre à exécuter, de façon autonome ou en coopération avec d'autres cellules, les activités d'exploitation enregistrées dans les ressources communes. Pour cela, cette cellule ou ce groupe de cellules est géré par le système d'exploitation de l'activité, enregistré dans les ressources communes.

La cellule 30a comporte, en outre, une unité centrale de traitement (40) raccordée par l'intermédiaire de bus de données et d'adresses à une carte d'entrée/sortie (42) et à des mémoires (44) locales de travail. Le bus de données et d'adresses est également raccordé à un ensemble (46a) de cartes d'interface avec l'outil (9) d'administration du système (2). L'unité centrale de traitement (40) est destinée à exécuter des opérations de calcul. Elle comporte à cet effet, dans le mode de réalisation décrit ici, huit microprocesseurs de 64 bits aptes à exécuter, en parallèle et simultanément, ces opérations de calcul. La carte d'entrée/sortie (42) est destinée à assurer les échanges d'informations entre les ressources communes (8) et la cellule (30a). Pour cela, elle est raccordée, par une liaison d'échange d'information, aux moyens (6) d'interconnexion.

Les mémoires (44) locales de travail comportent notamment un identificateur unique de la cellule. Par exemple, ici, cet identificateur est un numéro d'ordre permettant de distinguer cette cellule (30a) des autres cellules du système (2). Ici, deux mémoires (44) locales de travail sont représentées. Ces mémoires sont, par exemple, des mémoires de type non volatiles (NVRAM, pour l'anglais «Non Volatile Random Access Memory»). Ce type de mémoire peut être destiné à contenir le chemin d'accès au disque système qui doit être lancé sur la cellule (30a). Ce chemin d'accès indique donc quelle est la succession de segments matériels à parcourir pour atteindre le disque système. Une telle mémoire (44) comporte également le programme d'amorçage ou programme BIOS (« Basic Input Ouput System », selon la terminologie anglaise). Ce programme BIOS réalise les fonctions élémentaires d'interface entre les ressources matérielles de la cellule (30a) et un système d'exploitation exécuté sur cette cellule. Ce programme BIOS est apte, en outre, à lancer le système d'exploitation correspondant au chemin d'accès enregistré dans la mémoire (44).

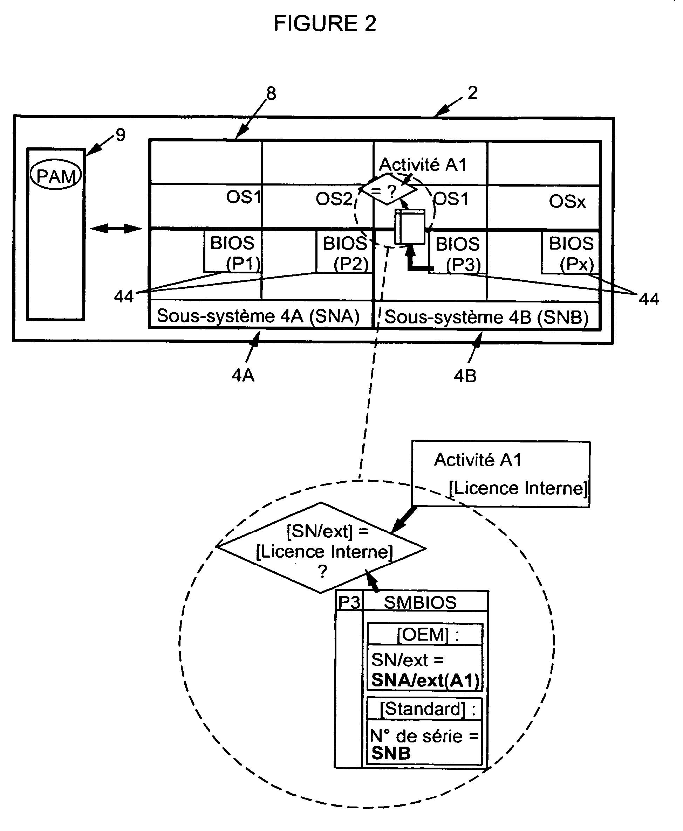

Les ensembles de cartes (46a, 46b) d'interface de chacun des sous-systèmes (4A et 4B, respectivement) comportent ici, chacune deux cartes d'interface (48a, 50a et 48b, 50b, respectivement) et une mémoire de stockage des numéros de série (SNA et SNB, respectivement) des plateformes multicellulaires de ces sous-systèmes (4A et 4B). L'outil (9) d'administration peut ainsi accéder aux numéros de série (SNA et SNB) de tous les sous-systèmes (4A et 4B, respectivement) qu'il a sous son contrôle. Les cartes (48a et 48b) sont raccordées aux cellules (30a, 36a et 30b, 36b, respectivement), tandis que les cartes (50a et 50b) sont raccordées aux cellules (32a, 34a et 32b, 34b, respectivement). Ces cartes (48a, 48b, 50a et 50b) sont raccordées à l'outil (9) d'administration. Elles sont identiques et seule la carte 48a sera décrite ici. La carte (48a) est apte à gérer les ressources matérielles des cellules (30a et 36a). Par exemple, cette carte (48a) est propre à transmettre à l'outil (9) d'administration des informations générées par le programme BIOS des mémoires (44) locales de travail ou, à l'inverse, transmettre par l'outil (9) d'administration des informations à enregistrer dans des tables d'interface standard, dites tables SMBIOS (« System Management Basic Input Ouput System », selon la terminologie anglaise), stockées dans ces mémoires (44) locales de travail. Ces tables SMBIOS servent d'interfaces standard avec les systèmes d'exploitation pour leur communiquer des informations liées à la configuration de la plateforme multiceltulaire (4A). De même, ces tables d'interface SMBIOS servent d'interface standard avec les applications exécutées dans les systèmes d'exploitation. Par exemple, lorsqu'une application nécessite un mécanisme de gestion de licence, son initialisation dans un système d'exploitation s'accompagne d'une vérification d'un numéro de série stocké dans les tables SMBIOS. Une telle application possède un numéro de licence interne, stocké parmi les informations permettant la configuration et/ou l'exécution de l'application sur le système d'exploitation dans lequel elle est installée. Lorsque l'application s'initialise dans le système, elle compare, par exemple, son numéro de licence interne avec le numéro de série enregistré dans la table SMBIOS. L'invention prévoit donc un enregistrement, par l'outil (9) d'administration, de numéros de série dans ces tables SMBIOS, comme expliqué ci-après et représenté sur la figure 2. Les tables SMBIOS, ainsi que la plupart des tables d'interface, possèdent différents champs utilisés pour enregistrer diverses informations spécifiques des ressources matérielles et logicielles dont elles constituent l'interface. Parmi ces champs des tables SMBIOS, certains sont dits « standards » car ils sont utilisés systématiquement (par défaut), par les systèmes d'exploitation et les applications, pour enregistrer ou lire des informations relatives à leur exécution sur un système. D'autres champs des tables d'interface sont dits OEM (« Original Equipement Manufacturer », selon la terminologie anglaise) et correspondent à des champs prévus par les normes des fabricants et laissés libres pour que les fabricants puissent les utiliser selon leurs besoins. Ces cartes (48a, 50a) sont également aptes à intercepter les accès d'un système d'exploitation aux ressources matérielles des cellules. Ces accès des systèmes d'exploitation aux ressources matérielles des cellules se font via des interfaces standard, soit directement, soit au travers du BIOS. Par exemple, ces cartes (48a, 50a) peuvent comporter, pour chaque cellule, une interface standard conforme aux spécifications de l'interface IPMI (« Intelligent Platform Management Initiative », selon la terminologie anglaise), une interface EFI (« Extended Firmware Interface », selon la terminologie anglaise), une interface ACPI (« Advanced Configuration and Power Interface », selon la terminologie anglaise). Dans le cadre de l'invention, les interfaces de la plateforme multicellulaire avec les systèmes d'exploitation ne nécessitent pas l'implémentation de l'ensemble des spécifications mais simplement d'une table d'interface telle que, par exemple, la table SMBIOS. Dans les plateformes multicellulaires selon l'invention, les cartes (48a, 50a) d'interface sont propres à retransmettre immédiatement à l'outil (9) d'administration toute instruction interceptée par l'intermédiaire de ces interfaces. Ces instructions sont transmises à l'outil (9) d'administration associées avec un identificateur unique permettant d'identifier l'activité ayant émis cette instruction. Ainsi, chaque système d'exploitation offre des fonctionnalités de gestion des ressources informatiques matérielles des plateformes multicellulaires. Ces fonctionnalités sont soit mises en oeuvre à l'initiative d'un logiciel exécuté sur ce système d'exploitation, soit mises en oeuvre à l'initiative du système d'exploitation lui-même. Par exemple, le jeu d'instructions utilisé ici est un jeu d'instructions standard conforme aux spécifications de l'interface standard IPMI définies par INTEL. Cette spécification définit l'interface matérielle dont doivent être équipées les plateformes (4A et 4B), c'est-à-dire par exemple, des registres de stockage d'informations, ainsi que l'interface logicielle, c'est-à-dire par exemple, les pilotes de périphériques (ou "drivers") dont le système d'exploitation doit être muni.

Grâce à ces ensembles de cartes d'interface (46a et 46b) permettant la transmission des informations de ces interfaces standard à l'outil (9) d'administration, ce dernier est apte à gérer la configuration des sous-systèmes (4A et 4B, respectivement). L'outil (9) d'administration est, par exemple, réalisé à partir d'un ordinateur (90), distinct des sous-systèmes (4A et 4B), équipé de moyens (91) de saisie tels qu'un clavier et de moyens (92) d'affichage tels qu'un écran. Cet ordinateur (90) comporte naturellement des moyens (100) de traitement et des moyens (112) de mémorisation. Ces moyens (112) de mémorisation contiennent, d'une part, une liste (70) de numéros de série (SNA, SNB) des sous-systèmes constitutifs du système (2) selon l'invention et, d'autre part, une mémoire (72) de configuration pour le stockage de définitions de fichiers informatiques ou objets logiques, dits objets « domaines » (D1, D2, D3), susceptibles d'être activés sur les sous-systèmes (4A et 4B).

Les objets domaines (D1, D2, D3) comportent des variables correspondant à des informations relatives à la définition de périmètres (P1, P2, P3) et à des activités à exécuter sur chacun des périmètres (P1, P2, P3) configurés sur le système (2). Un objet domaine regroupe, d'une part, un fichier de définition d'un périmètre (P1, P2, P3) matériel de ressources informatiques et, d'autre part, un objet logique, dit objet « identité » (ID), définissant une activité à exécuter sur un périmètre. Les variables d'un objet identité (ID) correspondent à des informations relatives à l'exécution d'une activité dans un des périmètres (P1, P2, P3) configurés sur le système (2). Ces variables des objets identité (ID) sont destinées à contenir l'ensemble des paramètres de configuration nécessaires à l'exécution du système d'exploitation de l'activité de manière à ce que ce système d'exploitation puisse être exécuté avec les mêmes paramètres de configuration sur n'importe quel périmètre. L'indépendance du système d'exploitation vis-à-vis du périmètre de ressources matérielles sur lequel il est ou sera exécuté est ainsi obtenue. Un objet identité comporte également des informations pour indiquer quel est le système d'exploitation à activer et, éventuellement, le ou les logiciels d'application à exécuter pour réaliser la fonction souhaitée par l'utilisateur. Les systèmes d'exploitation et les logiciels d'application nécessitant fréquemment un mécanisme de gestion de licence basé sur le principe des numéros de série, l'invention prévoit d'enregistrer également, parmi les variables des objets identité (ID), un numéro de série étendu (SN/ext) attribué à une activité et servant de licence d'autorisation pour l'exécution de cette activité. Les particularités concernant l'attribution et l'utilisation des numéros de série étendus seront détaillées plus loin. Le fichier de définition d'un périmètre (P1, P2, P3) contient un identificateur unique de ce périmètre (P1, P2, P3) et la définition des ressources informatiques matérielles destinées à être mises en oeuvre pour exécuter l'activité d'exploitation correspondant à l'objet identité (ID) enregistré dans l'objet domaine (D1, D2, D3). La définition d'un périmètre comporte à cet effet un ou plusieurs identificateurs de cellules des sous-systèmes (4A, 4B), au moins une référence au disque système contenant le système d'exploitation à exécuter et, ici, une ou plusieurs références à des disques de données contenant le ou les logiciels d'application à exécuter et/ou les données à traiter.

A titre d'exemple, la mémoire (72) de configuration comporte ici trois domaines notés D1, D2 et D3. Le domaine D1 comprend la définition d'un périmètre P1 et d'une activité A1 identifiée par l'objet ID1. Le périmètre P1 défini dans cet exemple est représenté schématiquement en pointillés courts et comprend trois cellules (30a, 32a et 36a) du premier sous-système (4A), ainsi que le disque de données (10) et le disque système (14) des ressources communes (8). L'objet identité ID1 comprend quant à lui un identificateur de l'activité A1, des identificateurs d'un logiciel d'application (20) et d'un système d'exploitation (24), ainsi qu'un numéro de série étendu (SN/ext) qui sert de numéro de licence à l'activité A1 lors de son initialisation sur le système (2). Le domaine D2 comprend un fichier de définition d'un périmètre P2 et d'une activité A2 identifiée par l'objet ID2. Le périmètre (P2) défini dans cet exemple est représenté schématiquement en pointillés longs et comprend une cellule (34a) du premier sous-système (4A), le disque de données (12) et le disque système (16). L'objet identité (ID2) contient quant à lui un identificateur d'activité (A2) et des identificateurs d'un logiciel d'application (22) et d'un système d'exploitation (26), ainsi qu'un numéro de série étendu (SN/ext). Le domaine D3 comprend un fichier de définition d'un périmètre P3 et l'objet identité ID1 identifiant l'activité A1. Le périmètre P3 est représenté en lignes mixtes et comprend deux cellules (34b et 36b) du deuxième sous-système (4B), un disque de données (10) et un disque système (14). Dans le cas où un périmètre, tel que le périmètre P1, comportant plusieurs cellules, est activé sur une plateforme (4A), une seule des cellules est une cellule « maître », tandis que les autres cellules du même périmètre sont des cellules esclaves. Ainsi, cet ensemble de cellules se comporte en réalité comme une seule unité de traitement multiprocesseur. La cellule « maître » est, par exemple, automatiquement déterminée en choisissant la cellule ayant le plus petit numéro d'ordre dans le périmètre. Dans une telle situation, seule l'interface matérielle IPMI associée à la cellule « maître » est utilisée, pour transmettre à l'outil (9) d'administration, les informations générées par l'activité exécutée dans ce périmètre multicellulaire.

Les domaines (D1, D2, D3) sont définis par un opérateur qui, grâce aux moyens (91) de saisie et aux moyens (92) d'affichage de l'outil (9) d'administration, réalise des saisies pour configurer le système (2). Les moyens (100) de traitement de l'outil (9) d'administration comportent notamment un module (102) de configuration permettant de définir les activités à exécuter sur les différents périmètres (P1, P2, P3) du système (2). Ce module (102) de configuration permet la création des objets domaines (D1, D2, D3) dont les variables correspondent à des informations relatives à la définition de périmètres (P1, P2, P3) et à des activités à exécuter sur chacun des périmètres (P1, P2, P3) configurés sur le système (2). Un module (104) de création d'identité, également présent dans les moyens (100) de traitement de l'outil (9) d'administration du système (2), permet la création des objets identité (ID) dont les variables correspondent à des informations relatives à l'exécution des activités dans les périmètres (P1, P2, P3) configurés sur le système (2). Ce module (104) de création d'identité permet ainsi d'installer les activités sur les différents périmètres (P1, P2, P3) configurés sur le système et, lors de cette installation, d'attribuer un nom et un numéro de série étendu (SN/ext) à chacune des activités.

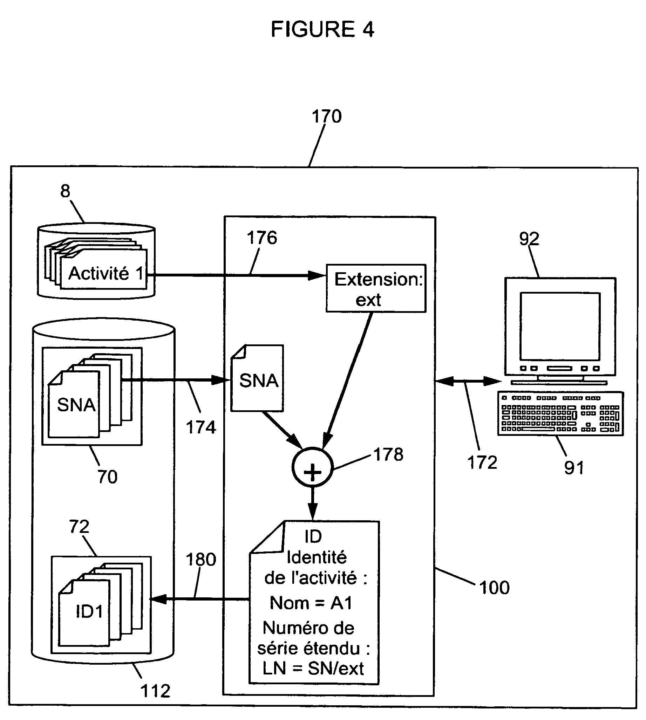

Comme indiqué précédemment, certaines activités nécessitent des logiciels d'application et des systèmes d'exploitation dont les exécutions sont conditionnées par la validation d'un numéro de licence d'utilisation. Lors de leur initialisation sur le système (2), ces activités nécessitant un mécanisme de gestion de licences compareront leur numéro de licence interne avec les numéros de série étendus (SN/ext) selon l'invention, attribués au préalable grâce à une étape (170) d'attribution d'un numéro de série étendu (SN/ext) à chacune des activités destinées à être exécutées sur des périmètres (P1, P2, P3) du système (2). Cette étape (170) d'attribution de numéros de série étendus (SN/ext), représentée schématiquement sur la figure 4, est réalisée grâce au module (104) de création d'identité qui requiert, grâce aux moyens (92) d'affichage, des saisies (172) de commandes d'un opérateur sur les moyens (91) de saisie de l'outil (9) d'administration. Par exemple, lorsqu'un opérateur installe une activité (A1) sur un périmètre (P1) du système (2), les moyens (100) de traitement de l'outil (9) d'administration du système (2) effectuent une copie (174) des numéros de série (SNA, SNB) des sous-systèmes (4A, 4B) constitutifs du système (2) et le module (104) de création d'identité requiert la sélection, par l'opérateur, de l'un de ces numéros de série (SNA, SNB). Ce numéro de série sélectionné pourra, par exemple, consister en le numéro de série (SNA) du sous-système (4A) sur lequel est configuré le périmètre (P1) sur lequel l'opérateur souhaite initialement autoriser l'exécution de l'activité (A1), mais pourra également consister en n'importe lequel des numéros de série (SNA, SNB) des sous-systèmes (4A, 4B) contrôlés par l'outil (9) d'administration. Ensuite l'opérateur saisit une extension, par exemple à deux caractères numériques, qu'il souhaite voir attribuée à une activité. Suite à cette attribution (176) de l'extension à l'activité, le module (104) de création d'identité réalise l'ajout (178) de l'extension au numéro de série (SNA) copié, pour obtenir un numéro de série étendu (SN/ext), enregistré (180) dans la mémoire (72) de configuration stockée dans les moyens (112) de mémorisation de l'outil (9) d'administration du système (2). Ce numéro de série étendu (SN/ext) de l'objet identité servira de numéro de licence à l'activité lors de son initialisation sur un périmètre, si elle le nécessite. Dans ces objets identité (ID1, ID2, ID3), l'opérateur va également pouvoir saisir des informations relatives à la nécessité du mécanisme de gestion de licence pour l'exécution de l'activité sur la plateforme. Par exemple, si une activité ne nécessite pas de licence d'activité pour son exécution, l'objet identité pourra, par exemple, ne contenir aucun numéro de série étendu et les moyens (100) de traitement de l'outil (9) d'administration, en accédant à cette variable de l'objet identité lors de l'initialisation de l'activité sur la plateforme, pourront autoriser son initialisation sans enregistrement préalable d'aucun numéro de série étendu. Dans un autre exemple, l'objet identité pourra contenir une variable spécifiquement dédiée à cette définition d'une nécessité d'un numéro de série étendu. Si l'activité nécessite une licence d'activité pour son exécution sur la plateforme, l'objet identité contiendra également une variable permettant de définir l'emplacement où doit être enregistré le numéro de série étendu (SN/ext) pour que l'activité puisse l'authentifier en tant que licence d'activité, avant d'être exécutée sur un des sous-systèmes (4A, 4B) de la plateforme. L'emplacement et les variables permettant sa définition seront détaillés plus loin. Une fois ces valeurs de variables attribuées à un objet identité d'une activité, l'opérateur peut, par exemple, définir d'autres périmètres (P3) sur lesquels il souhaite permettre l'exécution de l'activité en définissant d'autres domaines (D3), grâce au module (102) de configuration. Dans l'exemple de la figure 1, le domaine (D3) associe le périmètre (P3) avec l'objet identité (ID1) identifiant l'activité (A1). Le numéro de série étendu (SN/ext) de l'activité (A1) a hérité du numéro de série (SNA) du sous-système (4A) sur lequel son exécution a été initialement autorisée. Ce numéro de série (SNA) ainsi hérité est différent du numéro de série (SNB) du sous-système (4B) sur lequel est configuré le périmètre (P3), mais la mise en oeuvre de l'invention permettra, comme expliqué en détail ci-après, l'exécution de l'activité (A1) sur le périmètre (P3), malgré cette discordance entre les numéros de série (SNA et SNB) des sous-systèmes. Lorsqu'un logiciel nécessite un mécanisme de gestion de licences basé sur le principe des numéros de série, il comporte un numéro de licence interne, crypté ou non, qui est systématiquement vérifié au démarrage de l'activité correspondante sur un système (2). L'invention prévoit donc que lorsque l'opérateur a attribué un numéro de série étendu à une activité, il déclare, auprès des fabricants de logiciels (20, 22, 24, 26) nécessitant un mécanisme de gestion de licences basé sur le principe des numéros de série, les numéros de série étendus (SN/ext) attribués aux activités destinées à être exécutées dans des périmètres (P1, P2, P3) du système (2). Cette étape de déclaration permet alors aux fabricants d'implémenter ces numéros (SN/ext) déclarés dans le calcul des licences internes des logiciels (20, 22, 24, 26). Ainsi, les licences internes de ces logiciels sont calculées pour accepter les numéros de série étendus (SN/ext) au lieu des numéros de série (SNA, SNB) des sous-systèmes (4A, 4B) classiquement utilisés. Une activité ainsi déclarée auprès du fabricant de logiciel aura donc un numéro de licence interne qui correspond au numéro de série d'un sous-système sur lequel elle est initialement autorisée, combiné avec une extension, laissée au choix de l'opérateur et spécifique de l'activité. Lors de son initialisation, l'activité réalisera une étape (140) de vérification du numéro de série étendu (SN/ext) enregistré, en tant que licence d'activité, dans une mémoire de travail (44) du sous-système sur lequel elle est en cours d'initialisation, pour comparer ce numéro de série étendu (SN/ext) avec son numéro de licence interne. La figure 2 reprend de façon schématique l'exemple particulier de l'exécution de l'activité (A1) sur le périmètre (P3) représenté sur la figure 1. On retrouve sur la figure 2 l'outil (9) d'administration qui permet de gérer la configuration du système (2) et notamment des deux sous-systèmes (4A et 4B) et des ressources (8) communes contenant les systèmes d'exploitation (OS1, OS2, OSx) et les logiciels nécessaires aux activités. Comme mentionné précédemment, les cellules de calcul des sous-systèmes (4A et 4B) comportent des mémoires (44) locales de travail permettant de stocker le programme BIOS et les tables d'interface SMBIOS. Chaque périmètre (P1, P2, P3) configuré sur les sous-systèmes nécessite l'interface fournie par le BIOS et les tables SMBIOS stockés dans ces mémoires (44) de travail. L'activité (A1) possède un numéro de licence interne implémenté par le fabricant du (ou des) logiciel(s) responsable(s) de cette activité. Lors de son initialisation sur le système, l'activité accède aux mémoires (44) locales de travail pour consulter la table SMBIOS et comparer son numéro de licence interne avec le numéro de série étendu (SN/ext) qui a été initialement attribué à l'activité (A1). La table d'interface SMBIOS est représentée sur la figure 2, pour illustrer un exemple d'enregistrement, par l'outil (9) d'administration, du numéro de série étendu (SN/ext) dans un champ OEM de la table SMBIOS. Lors de l'autorisation de son exécution sur le sous-système (4A), l'activité (A1) a hérité du numéro de série (SNA) et son numéro de série étendu (SN/ext) peut, par exemple, être exprimé sous la forme SNA/ext(A1), où ext(A1) représente l'extension attribuée à l'activité (A1) lors de son autorisation initiale sur le sous-système (4A) dont elle hérite du numéro de série (SNA). Pourtant, on peut noter que, par exemple dans un champ standard de la table SMBIOS, figure le numéro de série (SNB) du sous-système (4B) sur lequel est configuré le périmètre (P3) dans lequel l'activité (A1) en cours d'initialisation dans la figure 2. L'activité (A1) est donc en train de s'initialiser dans un sous-système (4B) qui possède un numéro de série (SNB) différent de celui (SNA) sur lequel elle est autorisée a être exécutée, mais puisque l'invention permet que l'activité (A1) compare son numéro de licence interne au numéro de série étendu (SN/ext) enregistré par l'outil (9) d'administration dans la table SMBIOS du sous-système (4B) sur lequel elle est en train de s'initialiser, l'activité va pouvoir s'exécuter sans problème comme si elle se trouvait sur le sous-système (4A) initialement autorisé. Il est évident que l'étape préalable de déclaration des numéros de série étendus (SN/ext) auprès des fabricants de logiciels dépend des algorithmes utilisés pour l'authentification des licences d'utilisation et que l'invention pourra mettre en oeuvre un cryptage et/ou un décryptage des licences utilisées. Il est également évident que pour les logiciels ne nécessitant pas de déclaration préalable, auprès du fabricant, du numéro de série du système sur lequel ils doivent être installés, mais nécessitant une saisie, lors de l'installation du logiciel sur le système (2), d'un numéro d'enregistrement laissé au choix de l'utilisateur, l'invention pourra, par exemple, comporter une étape de saisie du numéro de série étendu (SN/ext) lors de l'installation du logiciel sur le système (2). De même, il est évident que pour les logiciels ne nécessitant aucun mécanisme de gestion de licence, l'invention permet l'exécution de l'activité dans n'importe quel périmètre (P1, P2, P3) configuré sur le système (2).

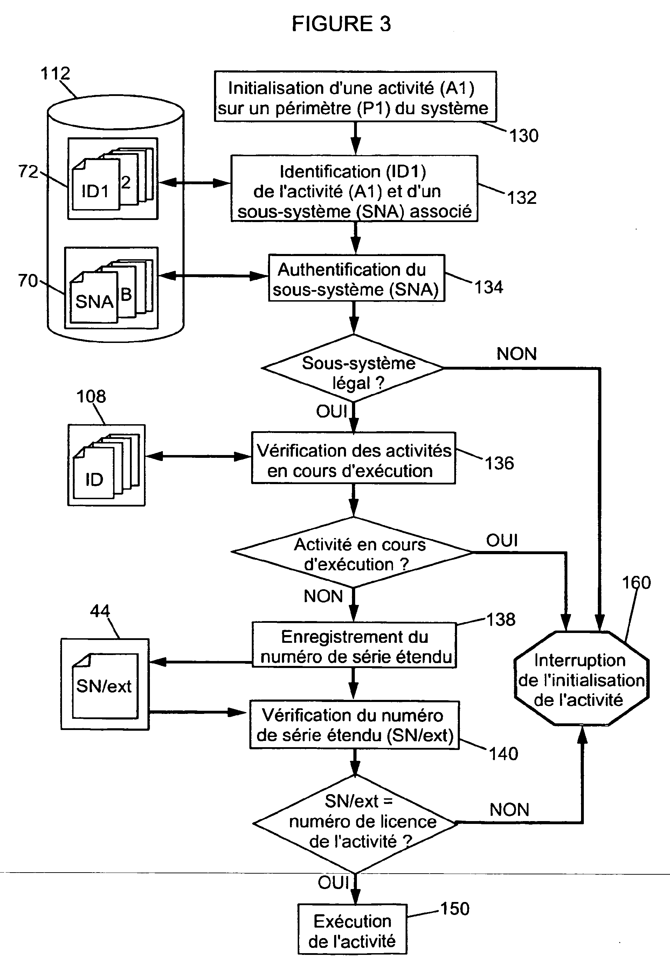

Le système (2) selon l'invention et notamment l'outil (9) d'administration comportent des moyens spécifiques, tels qu'un module (106) d'authentification de sous-systèmes, un module (108) de vérification des numéros de séries étendus des activités en cours et un module (110) d'enregistrement des numéros de série étendus (SN/ext), en tant que licences d'activités, dans des mémoires (44) de travail. Ces moyens spécifiques de l'invention sont, par exemple, implémentés dans les moyens (100) de traitement de l'outil (9) d'administration et permettent l'utilisation des numéros de série étendus (SN/ext) comme licences d'activité, pour autoriser ou non l'exécution (150) des activités sur des périmètres (P1, P2, P3). La description des fonctions réalisées par ces moyens spécifiques va maintenant être abordée en relation à la mise en oeuvre du procédé selon l'invention en référence à la figure 3.

Lors de l'initialisation (130) d'une activité (A1), par exemple, sur le périmètre (P1) de la figure 1, activé grâce à l'objet domaine (D1) configuré grâce au module (102) de configuration du système, les moyens (100) de traitement de l'outil (9) d'administration réalisent une identification (132) de l'activité (A1), grâce au numéro de série étendu (SN/ext), associé, dans la mémoire (72) de configuration, à l'activité (A1) dans l'objet (ID1) du domaine (D1) activé. Ces moyens (100) de traitement de l'outil (9) d'administration extraient de ce numéro de série étendu (SN/ext) le numéro de série (SNA) du sous-système (4A) sur lequel est autorisée l'exécution de l'activité (A1) d'après l'objet domaine (D1). Le module (106) d'authentification des sous-systèmes réalise alors une authentification (134) du numéro de série (SNA) du sous-système (4A) sur lequel l'exécution (150) de l'activité (A1) est autorisée, grâce à une comparaison du numéro de série (SNA) du sous-système (4A) identifié, avec la liste (70) des numéros de série (SNA, SNB) des sous-systèmes (4A, 4B) constitutifs du système (2). Cette liste (70) de numéros de série (SNA, SNB) des sous-systèmes est stockée dans les moyens (112) de mémorisation de l'outil (9) d'administration du système (2) et définit les sous-système que l'outil (9) d'administration a sous son contrôle. Lorsque le numéro de série (SNA) du sous-système (4A), extrait du numéro de série étendu (SN/ext) et définissant le sous-système (4A) sur lequel cette activité (A1) est autorisée à être exécutée, n'est pas présent dans cette liste (70), le module (106) d'authentification des sous-systèmes renvoie un message d'erreur et réalise une interruption (160) de l'initialisation de l'activité. Cette étape permet donc de s'assurer qu'une activité ne va pas être exécutée sur un sous-système non authentifié.

Si le numéro de série (SNA) extrait est retrouvé dans la liste des numéros de série que l'outil (9) d'administration a sous son contrôle, le procédé se poursuit par une étape de vérification (136) des numéros de séries étendus (SN/ext) des activités en cours d'exécution (150) sur les différents sous-systèmes (4A, 4B) constitutifs du système (2). Le module (108) de vérification des activités courantes réalise une comparaison du numéro de série étendu (SN/ext) de l'activité (A1) en cours d'initialisation (130) avec une pluralité de numéros de série étendus (SN/ext) d'activités en cours d'exécution dans le système (2). Les moyens (100) de traitement de l'outil (9) d'administration contrôlent l'exécution (150) des activités sur les différents sous-systèmes (4A, 4B) constitutifs du système (2) et peuvent donc à tout moment vérifier les numéros de série étendus (SN/ext) des activités en cours d'exécution sur le système (2). Après lecture et comparaison de tous les numéros de série étendus des activités en cours d'exécution sur le système (2), lorsque le numéro de série étendu (SN/ext) de l'activité en cours d'initialisation est déjà utilisé pour l'exécution (150) de l'activité (A1) sur un des périmètres (P1, P2, P3) configurés sur le système (2), l'initialisation de l'activité est interrompue (160) par les moyens (100) de traitement de l'outil (9) d'administration du système (2). Cette étape permet donc de s'assurer qu'une même licence d'un logiciel n'est pas utilisée sur plusieurs sous-systèmes en même temps et donc de garantir l'unicité de l'utilisation de la licence.

Si le numéro de série étendu (SN/ext) n'est pas déjà utilisé par une activité en cours d'exécution sur le système, le procédé se poursuit par une étape d'enregistrement (138) du numéro de série étendu (SN/ext), en tant que licence d'activité, dans une des mémoires (44) de travail des ressources informatiques matérielles du sous-système (4A) dans lequel est configuré le périmètre (P1) sur lequel l'activité (A1) est en cours d'initialisation. Cette étape (138) permet de mettre le numéro de série étendu (SN/ext) de l'activité (A1) à disposition des cellules de calcul (30a, 32a, 36a) pour que ces dernières effectuent une comparaison de ce numéro de série étendu (SN/ext) avec le numéro de licence interne du logiciel. Suite à cette étape (138) d'enregistrement du numéro de série étendu (SN/ext) dans un champ des tables d'interface stockées dans les mémoires (44) de travail du sous-système, les activités nécessitant un mécanisme de gestion de licences basé sur le principe des numéros de série effectuent une étape (140) de vérification de l'authenticité de la licence d'activité. Comme mentionné précédemment, cette étape (140) consiste en une comparaison, par les ressources informatiques matérielles du sous-système (4A) dans lequel est configuré le périmètre (P1) sur lequel l'activité (A1) est en cours d'initialisation, du numéro de série étendu (SN/ext) avec le numéro de licence interne du logiciel. Cette comparaison permet alors soit l'exécution (150) de l'activité (A1) en cas de concordance entre le numéro de série étendu (SN/ext) et le numéro de licence interne du logiciel, soit l'interruption (160) de l'initialisation de l'activité (A1) en cas de discordance. Dans l'exemple, représenté sur la figure 2, où l'activité est en cours d'initialisation sur un autre périmètre (P3) que celui (P1) initialement autorisé, l'étape (138) d'enregistrement, par l'outil (9) d'administration, du numéro de série étendu (SN/ext) dans une mémoire (44) locale de travail, par exemple dans la table SMBIOS, permet que l'activité puisse être exécutée sur un autre sous-système (4B) que celui (4A) initialement autorisé, comme elle s'initialisait effectivement sur le sous-système (4A) autorisé. Par exemple, l'activité (A1), initialement autorisée à être exécutée sur un périmètre (P1) d'un premier sous-système (4A), est en cours d'initialisation sur un autre périmètre (P3) configuré sur un autre sous-système (4B), l'invention permet que l'activité soit exécutée sur cet autre périmètre (P3) dans la mesure où elle n'est pas déjà exécutée sur le sous-système (SNA) sur lequel elle a initialement été autorisée, ni aucun autre sous-système. En effet, cette étape (138) d'enregistrement du numéro de série étendu (SN/ext), en tant que licence d'activité, dans une mémoire de travail (44) du sous-système (4B) sur lequel l'activité (A1) est en cours d'initialisation (130), permet que le mécanisme de gestion de licence de l'activité accède ainsi au numéro de série étendu (SN/ext) enregistré dans la table SMBIOS du périmètre (P3) sur lequel l'activité (A1) s'initialise. Ce numéro de série étendu (SN/ext) contient le numéro de série (SNA) du sous-système (4A) sur lequel l'activité est autorisée et l'extension « ext(A1) » attribuée à l'activité (A1). Ainsi, l'activité est exécutée normalement sur le sous-système (4B) dont le numéro de série (SNB) ne correspond pas au numéro de série (SNA) du sous-système (4A) autorisé, comme s'il s'agissait effectivement du sous-système autorisé.

L'étape (138) d'enregistrement du numéro de série étendu (SN/ext) en tant que licence d'activité, dans les mémoires (44) de travail des ressources informatiques matérielles du sous-système (4A) dans lequel est configuré le périmètre (P1) sur lequel l'activité (A1) est en cours d'initialisation, peut également comporter une étape préalable de vérification que l'activité nécessite une licence d'activité pour son exécution (150) et une étape de détermination de l'emplacement, dans les tables d'interface, où doit être enregistré le numéro de série étendu (SN/ext) en tant que licence d'activité. Ces étapes préalables sont réalisées grâce aux moyens (100) de traitement de l'outil (9) d'administration qui comportent des moyens de vérification de la nécessité de mécanismes de gestion de licences et des moyens de détermination de l'emplacement où le numéro de série étendu doit être enregistré avant l'exécution de l'activité, pour que l'activité puisse effectuer l'étape (140) de vérification de l'authenticité de la licence d'activité, par comparaison du numéro de série étendu (SN/ext) avec le numéro de licence interne du logiciel. Ces moyens permettent aux moyens (100) de traitement de l'outil (9) d'administration, par exemple, d'accéder aux objets identité (ID1, ID2, ID3) stockés dans la mémoire (72) de configuration et d'en extraire, d'une part, des données représentatives de la nécessité d'un mécanisme de gestion de licence et, d'autre part, de données représentatives de l'emplacement, dans les tables d'interface, où doit être enregistré le numéro de série étendu. Si l'activité nécessite un mécanisme de gestion de licence, l'objet identité contiendra des données représentatives de cette nécessité d'un mécanisme de gestion de licence et des données représentatives de l'emplacement où doit être enregistré le numéro de série étendu (SN/ext) attribué à l'activité en tant que licence d'activité. Le module (110) d'enregistrement effectue alors l'enregistrement du numéro de série étendu (SN/ext) à l'emplacement approprié dans une table d'interface d'accès aux ressources informatiques matérielles du sous-système (4A), stockée dans la mémoire (44) de travail locale de ce sous-système (4A). Cette table d'interface peut être une table de type SMBIOS, comme indiqué précédemment et représenté sur la figure 2. Lorsque l'activité (A1) permet une définition d'une adresse pour la vérification de la licence d'activité, c'est-à-dire que cette activité permet que l'outil (9) d'administration contrôle l'adresse mémoire à laquelle la licence va être recherchée pour être comparée à la licence interne de l'activité, alors le module (110) d'enregistrement ira enregistrer le numéro de série étendu dans un champ OEM spécifiquement dédié à cet effet. Lorsque l'activité ne permet pas que l'outil (9) d'administration modifie l'adresse mémoire à laquelle la licence va être recherchée et nécessite, au contraire, de rechercher la licence dans un champ standard de la norme des spécifications des tables SMBIOS, alors le module (110) d'enregistrement ira remplacer le numéro de série (SNA, SNB) du sous-système (4A, 4B) sur lequel l'activité est en cours d'initialisation, par le numéro de série étendu (SN/ext) de l'activité (A1), dans ce champ standard de la table d'interface SMBIOS d'accès aux ressources informatiques matérielles du sous-système (4A, 4B). Ces différentes possibilités sont naturellement configurables par l'opérateur gestionnaire du système (2), grâce aux moyens (100) de traitement de l'outil (9) d'administration, par saisie, dans l'objet identité de chacune des activités, de données représentatives de la nécessité d'un mécanisme de gestion de licence et de données représentatives de l'emplacement où doit être enregistré le numéro de série étendu (SN/ext) en tant que licence d'activité. L'outil (9) d'administration propose des options variables de configuration qui permettent à l'opérateur de définir différents types d'activité à exécuter sur les différents périmètres (P1, P2, P3) du système. Comme mentionné précédemment, l'opérateur pourra, par exemple, pour les activités ne nécessitant pas de mécanismes de gestion de licences, ne saisir aucune valeur pour la variable concernant le numéro de série étendu (SN/ext). Si cette variable n'a pas de contenu, les moyens (100) de traitement de l'outil (9) d'administration, grâce aux moyens de vérification de la nécessité de mécanisme de gestion de licence, détermineront automatiquement, en consultant l'objet identité, que l'activité ne nécessite aucun mécanisme de gestion de licence et ne nécessite donc pas d'enregistrement de numéro de série étendu en tant que licence d'activité dans les tables d'interface. Dans un autre exemple, l'objet identité pourra contenir une variable booléenne spécifiquement dédiée à la nécessité d'un mécanisme de gestion de licence et pouvant prendre soit la valeur « vrai » si le mécanisme nécessite une licence d'activité pour être exécutée et donc l'enregistrement de cette licence d'activité dans les tables d'interface standard, soit la valeur « faux » si elle ne nécessite aucune licence d'activité. De la même manière, les objets identité contiennent une variable correspondant à l'emplacement où doit être enregistré le numéro de série étendu de l'activité, si celle-ci le nécessite. Cette variable pourra, par exemple, consister en une variable à valeur booléenne, pour laquelle la valeur « vraie » correspondra, par exemple, à la nécessité d'enregistrer le numéro de série étendu (SN/ext) dans un champ standard et la valeur « faux » à la possibilité de l'enregistrer dans un champ OEM. Dans un autre exemple, cette variable pourra contenir un chemin d'accès définissant un emplacement dans les tables d'interface standard. Ainsi, les moyens (100) de traitement de l'outil (9) d'administration, grâce aux moyens de détermination de l'emplacement où doit être enregistré le numéro de série étendu (SN/ext) en tant que licence d'activité avant l'exécution de l'activité sur un périmètre, détermineront automatiquement, par consultation de l'objet identité, l'emplacement où le module (110) d'enregistrement doit enregistrer le numéro de série étendu (SN/ext) dans les tables d'interface. Dans un autre exemple, les moyens (100) de traitement de l'outil (9) d'administration pourront comporter des moyens de recherche des informations de licence des logiciels installés sur le système et permettront d'éviter à l'opérateur de réaliser lui-même ces étapes de définition de ces variables des objets identité, en accédant automatiquement aux informations des logiciels permettant l'exécution des activités, parmi les données stockées dans les disques (14, 16) systèmes et les disques (10, 12) de données, et en les enregistrant dans les objets identité.

Dans certains cas particulier, l'opérateur peut souhaiter empêcher l'exécution (150) d'une activité sur un autre sous-système (4B) que celui initialement autorisé (4A). Dans ce cas, l'étape (134) d'authentification du sous-système (4A) sur lequel l'exécution (150) de l'activité (A1) est autorisée pourra consister en une comparaison, par le module (106) d'authentification, du numéro de série (SNA) du sous-système (4A) identifié d'après le numéro de série étendu (SN/ext) de l'activité, avec uniquement le numéro de série (SNA, SNB) du sous-système (4A, 4B) sur lequel l'activité (A1) est en cours d'initialisation. Ainsi le module (106) d'authentification vérifiera que l'activité est encours d'initialisation sur le sous-système initialement autorisé et empêchera l'exécution de l'activité si ce n'est pas le cas.

Selon un mode de réalisation de l'invention, le procédé est mis en oeuvre par le logiciel d'administration (PAM) du système (2) à processeurs multiples, exécuté sur les moyens (100) de traitement de l'outil (9) d'administration du système (2). Ce logiciel d'administration (PAM) permet de gérer la configuration matérielle du système (2) en établissant des périmètres (P1, P2, P3) dans des sous-systèmes (4A, 4B) constitutifs du système (2), en fonction des commandes d'un opérateur, saisies grâce aux moyens (91) de saisie et aux moyens (92) d'affichage de l'outil (9) d'administration du système. Ce logiciel d'administration (PAM) permet ainsi de contrôler, grâce à des cartes d'interfaces (46a, 46b), les accès aux ressources informatiques matérielles des sous-systèmes (4A, 4B) constitutifs du système et de contrôler l'initialisation (130) d'activités sur les périmètres (P1, P2, P3) configurés sur le système (2), grâce aux numéros de série étendus (SN/ext) de ces activités, en contrôlant l'interopérabilité des différents modules et moyens du système (2).

Il doit être évident pour les personnes versées dans l'art que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de gestion d'activités multiples exécutées sur au moins un périmètre (P1, P2, P3) de ressources informatiques matérielles configuré sur au moins une plate-forme informatique multicellulaire (4A, 4B) d'un système (2) à processeurs multiples, chaque activité d'exploitation contenant au moins un système d'exploitation apte à gérer les ressources informatiques du périmètre sur lequel elle est destinée à être exécutée, et la plate-forme informatique multicellulaire (4A, 4B) comportant plusieurs périmètres (P1, P2, P3) de ressources informatiques matérielles distincts activables successivement ou simultanément sur la plate-forme (4A, 4B), **caractérisé en ce que** le procédé comporte les étapes suivantes :
- identification (132) d'une activité (A1) en cours d'initialisation (130) sur un périmètre (P1, P2, P3) du système (2), par un outil d'administration (9) du système (2), grâce à un numéro de série étendu (SN/ext), stocké dans des moyens (112) de mémorisation de l'outil d'administration (9) et comprenant, d'une part, un numéro de série (SNA) d'un sous-système (4A) sur lequel l'exécution (150) de l'activité (A1) est autorisée et, d'autre part, une extension du numéro de série, attribuée à l'activité (A1),
- authentification (134) du numéro de série (SNA) du sous-système (4A) comme appartenant au système et sur lequel l'exécution (150) de l'activité (A1) est autorisée,
- vérification (136) des numéros de séries étendus (SN/ext) des activités en cours d'exécution (150) sur les différents sous-systèmes (4A, 4B) constitutifs du système (2),
- enregistrement (138) du numéro de série étendu (SN/ext), en tant que licence d'activité, dans des mémoires (44) de travail des ressources informatiques matérielles du sous-système (4A, 4B) dans lequel est configuré le périmètre (P1, P2, P3) sur lequel l'activité (A1) est en cours d'initialisation.

2. Procédé selon la revendication 1, **caractérisé en ce que**, suite à la réalisation des étapes du procédé, les activités nécessitant un mécanisme de gestion de licences requérant au moins un numéro de série effectuent une étape (140) de vérification de l'authenticité de la licence d'activité, cette étape (140) consistant en une comparaison, par les ressources informatiques matérielles du sous-système (4A) dans lequel est configuré le périmètre (P1) sur lequel l'activité (A1) est en cours d'initialisation, du numéro de série étendu (SN/ext), enregistré (138), en tant que licence d'activité, dans les mémoires (44) de travail des ressources informatiques matérielles du sous-système (4A) dans lequel est configuré le périmètre (P1) sur lequel l'activité (A1) est en cours d'initialisation, avec le numéro de licence interne du logiciel, cette comparaison permettant soit l'exécution (150) de l'activité (A1) en cas de concordance de ces deux licences, soit l'interruption (160) de l'initialisation de l'activité (A1) en cas de discordance.

3. Procédé selon une des revendications 1 et 2, **caractérisé en ce qu'**il comporte une étape (170) préalable d'attribution d'un numéro de série étendu (SN/ext) à chacune des activités destinées à être exécutées sur des périmètres (P1, P2, P3) du système (2), grâce à des saisies (172) de commandes, réalisées par un opérateur, sur des moyens (91) de saisie et des moyens (92) d'affichage de l'outil (9) d'administration du système (2), ces commandes mettant en oeuvre les étapes suivantes :
- copie (174) du numéro de série (SNA, SNB) de chacun des sous-systèmes (4A, 4B) sur lesquels les activités sont destinées à être exécutées,
- sélection de l'un de ces numéros de série pour chacune des activités et attribution (176) d'une extension à chacune des activités,
- ajout (178) des extensions aux numéros de série (SNA, SNB) sélectionnés pour obtenir des numéros de série étendus (SN/ext) attribués à chacune des activités,
- enregistrement (180) des numéros de série étendus (SN/ext), attribués à chacune des activités, dans une mémoire (72) de configuration, stockée dans les moyens (112) de mémorisation de l'outil (9) d'administration du système (2), lors de l'installation de l'activité (A1) sur le système (2).

4. Procédé selon une des revendications 1 à 3, **caractérisé en ce qu'**il comporte une étape préalable de déclaration, auprès des fabricants de logiciels (20, 22, 24, 26) nécessitant un mécanisme de gestion de licences basé sur le principe des numéros de série pour l'exécution (150) d'activités dans des systèmes (2), des numéros de série étendus (SN/ext) attribués (170) aux activités destinées à être exécutées dans des périmètres (P1, P2, P3) du système (2), les fabricants pouvant alors implémenter ces numéros (SN/ext) déclarés dans le calcul des licences internes des logiciels (20, 22, 24, 26), pour l'étape (140) de vérification de l'authenticité des licences des activités.

5. Procédé selon une des revendications 1 à 4, **caractérisé en ce qu'**il comporte une étape préalable de configuration du système (2), grâce aux moyens (91) de saisie et aux moyens (92) d'affichage de l'outil (9) d'administration du système (2), par saisie par un opérateur qui définit, grâce à un module (102) de configuration de l'outil (9) d'administration du système (2), les activités à exécuter sur les différents périmètres (P1, P2, P3) du système (2), l'initialisation d'au moins une activité (A1) pouvant alors se produire sur un périmètre (P3) comportant des ressources informatiques matérielles appartenant à un sous-système (4B) différent du sous-système (4A) correspondant au numéro de série étendu (SN/ext) attribué à l'activité (A1).

6. Procédé selon une des revendications 1 à 5, **caractérisé en ce que** l'étape (134) d'authentification du sous-système (4A) sur lequel l'exécution (150) de l'activité (A1) est autorisée consiste en une comparaison, par un module (106) d'authentification présent dans les moyens (100) de traitement de l'outil (9) d'administration du système (2), du numéro de série (SNA) du sous-système (4A) identifié d'après le numéro de série étendu (SN/ext) de l'activité (A1), avec une liste (70) de numéros de série (SNA, SNB) des sous-systèmes (4A, 4B) constitutifs du système (2), cette liste (70) de numéros de série des sous-systèmes (SNA, SNB) étant stockée dans des moyens (112) de mémorisation de l'outil (9) d'administration du système (2) et permettant, grâce à cette comparaison, soit l'interruption (160) de l'initialisation de l'activité, lorsque le numéro de série (SNA) du sous-système (4A) sur lequel cette activité (A1) est autorisée à être exécutée n'est pas présent dans cette liste (70), soit, dans le cas contraire, une poursuite de la réalisation du procédé.

7. Procédé selon une des revendications 1 à 6, **caractérisé en ce que** l'étape (136) de vérification des numéros de séries étendus (SN/ext) des activités en cours d'exécution (150) dans le système (2) consiste en une comparaison, par un module (108) de vérification des activités courantes présent dans les moyens (100) de traitement de l'outil (9) d'administration du système (2), du numéro de série étendu (SN/ext) de l'activité (A1) en cours d'initialisation (130) avec une pluralité de numéros de série étendus (SN/ext) d'activités en cours d'exécution dans le système (2), cette pluralité permettant soit l'interruption (160) de l'initialisation de l'activité, par les moyens de traitement de l'outil (9) d'administration du système (2), lorsque le numéro de série étendu (SN/ext) de l'activité en cours d'initialisation est déjà utilisé pour l'exécution (150) d'une activité (A1) sur un des périmètres (P1, P2, P3) configurés sur le système (2), soit, dans le cas contraire, une poursuite de la réalisation du procédé.

8. Procédé selon une des revendications 1 à 7, **caractérisé en ce que** le procédé est mis en oeuvre par un logiciel d'administration (PAM) du système (2) à processeurs multiples, exécuté sur les moyens (100) de traitement de l'outil (9) d'administration du système (2) et gérant la configuration matérielle du système (2) en établissant des périmètres (P1, P2, P3) dans des sous-systèmes (4A, 4B) constitutifs du système (2), en fonction des commandes d'un opérateur, saisies grâce aux moyens (91) de saisie et aux moyens (92) d'affichage de l'outil (9) d'administration du système, ce logiciel d'administration (PAM) permettant de contrôler, grâce à des cartes d'interfaces (46a, 46b), l'exploitation des ressources informatiques matérielles des sous-systèmes (4A, 4B) constitutifs du système et de contrôler l'initialisation (130) d'activités sur les périmètres (P1, P2, P3) configurés sur le système (2), grâce aux numéros de série étendus (SN/ext) de ces activités.

9. Procédé selon une des revendications 1 à 8, **caractérisé en ce que** l'étape (138) d'enregistrement du numéro de série étendu (SN/ext) en tant que licence d'activité, dans les mémoires (44) de travail des ressources informatiques matérielles du sous-système (4A) dans lequel est configuré le périmètre (P1) sur lequel l'activité (A1) est en cours d'initialisation, consiste en une étape préalable de vérification de la nécessité d'une licence d'activité pour l'exécution de cette activité et, si elle le nécessite, en une étape de détermination de l'emplacement où doit être enregistré le numéro de série étendu en tant que licence d'activité, puis en l'enregistrement du numéro de série étendu (SN/ext), par un module (110) d'enregistrement, dans une table d'interface d'accès aux ressources informatiques matérielles du sous-système (4A), à l'emplacement déterminé, correspondant soit à un champ spécifique, lorsque l'activité (A1) permet une définition d'une adresse pour la vérification (140) de la licence, soit à un champ de la table d'interface d'accès aux ressources classiquement utilisé par les activités, dit champ standard, lorsque l'activité nécessite le remplacement du numéro de série (SNA) du sous-système (4A) dans lequel est configuré le périmètre (P1), par le numéro de série étendu (SN/ext) de l'activité (A1), dans ce champ standard de la table d'interface d'accès aux ressources informatiques matérielles du sous-système (4A).

10. Procédé selon une des revendications 5 à 9, **caractérisé en ce que** l'étape (170) d'attribution de numéros de série étendus (SN/ext) aux activités est associée à une création d'objets, dits « objets identité » (ID), par un module (104) de création d'identité présent dans les moyens (100) de traitement de l'outil (9) d'administration du système (2), les variables de ces objets identité (ID) correspondant à des informations relatives à l'exécution (150) de l'activité (A1) dans les périmètres (P1, P2, P3) configurés sur le système (2), telles que le nom de l'activité, la nécessité d'un mécanisme de gestion de licence et le numéro de série étendu (SN/ext) attribué à l'activité (A1), ainsi que l'emplacement où ce numéro de série étendu (SN/ext) doit être enregistré avant l'exécution de l'activité, l'étape de configuration du système, réalisée grâce au module (102) de configuration de l'outil (9) d'administration du système (2), étant associée à la création d'objets dits « objets domaines » (D1, D2, D3) dont les variables correspondent à des informations relatives à la définition de périmètres (P1, P2, P3) et à des activités à exécuter sur chacun des périmètres (P1, P2, P3) configurés sur le système (2), ces objets identités (ID) et ces objets domaines (D1, D2, D3) étant enregistrés dans la mémoire (72) de configuration stockée dans les moyens (112) de mémorisation de l'outil (9) d'administration du système (2).

11. Procédé selon une des revendications 1 à 10, **caractérisé en ce que** l'étape (134) d'authentification du sous-système (4A) sur lequel l'exécution (150) de l'activité (A1) est autorisée peut également consister en une comparaison, par le module (106) d'authentification, du numéro de série (SNA) du sous-système (4A) identifié d'après le numéro de série étendu (SN/ext) de l'activité, avec uniquement le numéro de série (SNA, SNB) du sous-système (4A, 4B) sur lequel l'activité (A1) est en cours d'initialisation, cette comparaison empêchant l'exécution (150) de l'activité sur un autre sous-système (4B) que celui initialement autorisé (4A).

12. Système (2) de gestion de l'exécution d'activités multiples, comportant au moins un sous-système (4A, 4B) à processeurs multiples constituant une plateforme informatique multicellulaire de ressources matérielles, un outil (9) d'administration du système comportant un module (102) de configuration pour définir des périmètres (P1, P2, P3) de ressources informatiques matérielles et activer, simultanément ou successivement, ces périmètres sur la plateforme (4A, 4B), chaque périmètre comportant une ou plusieurs cellules de calcul (30, 32, 34, 36), des ressources communes (8) comportant des moyens (10, 12, 14, 16) de stockage des activités, chaque activité contenant au moins un système d'exploitation apte à gérer les ressources informatiques du périmètre (P1, P2, P3) sur lequel elle est destinée à être exécutée, **caractérisé en ce qu'**il comporte :
• des moyens (112) de mémorisation de l'outil (9) d'administration du système stockant, d'une part, une liste (70) de numéros de série (SNA, SNB) correspondant chacun à un des sous-systèmes (4A, 4B) constitutifs du système et, d'autre part, une mémoire (72) de configuration contenant pluralité de numéros de série étendus (SN/ext) chacun comprenant, d'une part, un numéro de série (SNA) d'un sous-système (4A, 4B) sur lequel l'exécution (150) d'une activité (A1) est autorisée et, d'autre part, une extension du numéro de série, attribuée à l'activité (A1),
• des moyens (100) de traitement de l'outil (9) d'administration du système (2) comportant :
- un module (106) d'authentification de sous-systèmes, authentifiant les sous-systèmes (4A, 4B) sur lesquels des activités sont autorisées à être exécutées, d'après la liste (70) des numéros de série (SNA, SNB) des sous-systèmes (4A, 4B) constitutifs du système (2), stockée dans les moyens (112) de mémorisation de l'outil (9) d'administration,
- un module (108) de vérification des numéros de séries étendus (SN/ext) des activités en cours d'exécution sur les périmètres configurés dans le système (2), d'après une pluralité de numéros de série étendus d'activités en cours d'utilisation dans le système, et
- un module (110) d'enregistrement des numéros de série étendus (SN/ext) en tant que licences d'activités, dans des mémoires (44) de travail des ressources informatiques matérielles du sous-système (4A, 4B) dans lequel est configuré le périmètre (P1, P2, P3) sur lequel l'activité (A1) est en cours d'initialisation.

13. Système selon la revendication 12, **caractérisé en ce qu'**il comporte des moyens (91) de saisie et des moyens (92) d'affichage pour permettre à un opérateur d'attribuer un numéro de série étendu (SN/ext) à chacune des activités destinées à être exécutées sur des périmètres (P1, P2, P3) du système (2), en copiant le numéro de série (SNA, SNB) de chacun des sous-systèmes (4A, 4B) sur lesquels les activités sont destinées à être exécutée, puis en sélectionnant, pour chacune de ces activités, l'un de ces numéros de série (SNA, SNB) et en lui ajoutant une extension, pour obtenir un numéro de série étendu (SN/ext) et en enregistrant les numéros de série étendus (SN/ext) ainsi attribués à chacune des activités dans la mémoire (72) de configuration stockée dans les moyens (112) de mémorisation de l'outil (9) d'administration du système (2).

14. Système selon une des revendications 12 et 13, **caractérisé en ce que** l'outil (9) d'administration du système (2) comporte un module (102) de configuration comportant des moyens de définir les activités à exécuter sur les différents périmètres (P1, P2, P3) du système (2), par des moyens d'initialisation d'au moins une activité (A1) sur un périmètre (P3), ce périmètre (P3) pouvant comporter des ressources informatiques matérielles appartenant à un sous-système (4B) différent du sous-système (4A) correspondant au numéro de série étendu (SN/ext) attribué à l'activité (A1), grâce à des moyens de création d'objets dits « objets domaines » (D1, D2, D3) dont les objets domaine créés possèdent des variables correspondant à des informations relatives à la définition de périmètres (P1, P2, P3) et à des activités à exécuter sur chacun des périmètres (P1, P2, P3) configurés sur le système (2), le module (102) de configuration comportant également des moyens de création d'objets, dits « objets identité » (ID), par un module (104) de création d'identité, les variables de ces objets identité (ID) correspondant à des informations relatives à l'exécution (150) de l'activité (A1) dans les périmètres (P1, P2, P3) configurés sur le système (2), telles que le nom de l'activité, la nécessité d'un mécanisme de gestion de licence et le numéro de série étendu (SN/ext) attribué à l'activité (A1), ainsi que l'emplacement où ce numéro de série étendu doit être enregistré avant l'exécution de l'activité, ces objets identités (ID) et ces objets domaines (D1, D2, D3) étant enregistrés dans la mémoire (72) de configuration stockée dans les moyens (112) de mémorisation de l'outil (9) d'administration du système (2).

15. Système selon une des revendications 12 à 14, **caractérisé en ce que** les ressources informatiques matérielles des sous-systèmes (4A, 4B), dans lesquels sont configurés les périmètres (P1, P2, P3) sur lesquels les activités sont en cours d'initialisation, comportent des moyens d'accès à des tables d'interfaces stockées dans les mémoires (44) de travail de ces ressources informatiques matérielles, les numéros de série étendus (SN/ext) étant enregistrés en tant que licences d'activités, par le module (110) d'enregistrement, dans ces tables d'interfaces, des moyens de comparaison de ces licences d'activités avec des numéros de licences internes des logiciels responsables de ces activités et des moyens d'autorisation de l'exécution (150) de ces activités en cas de concordance entre ces licences d'activités et ces numéros de licences internes ou d'interruption (160) de l'initialisation de l'activité (A1) en cas de discordance.

16. Système selon une des revendications 12 à 15, **caractérisé en ce que** les moyens (100) de traitement de l'outil (9) d'administration du système (2) exécutent un logiciel d'administration (PAM) du système gérant la configuration matérielle du système en établissant des périmètres (P1, P2, P3) informatiques dans les sous-systèmes (4A, 4B) constitutifs du système (2), en fonction des commandes d'un opérateur, saisies grâce aux moyens (91) de saisie et aux moyens (92) d'affichage du système, ce loqiciel d'administration (PAM) permettant de contrôler, grâce à des cartes d'interfaces (46a, 46b) standards, les accès aux ressources matérielles du système et de contrôler l'initialisation d'activités sur les périmètres (P1, P2, P3) du système, en contrôlant l'interopérabilité des différents modules et moyens du système (2).

17. Système selon une des revendications 12 à 16, **caractérisé en ce que** les moyens (100) de traitement l'outil (9) d'administration du système (2) comportent des moyens de vérification de la nécessité de mécanismes de gestion de licences pour chacune des activités et des moyens de détermination de l'emplacement où le numéro de série étendu doit être enregistré avant l'exécution de l'activité, ces moyens permettant l'enregistrement du numéro de série étendu (SN/ext) en tant que licence d'activité, par le module (110) d'enregistrement, à l'emplacement déterminé, dans les tables d'interface d'accès aux ressources matérielles, stockée dans les mémoires (44) de travail des sous-systèmes (4A, 4B), dans lesquels sont configurés les périmètres (P1, P2, P3) sur lesquels les activités sont en cours d'initialisation.

18. Système selon une des revendications 12 à 17, **caractérisé en ce que** le module (106) d'authentification des sous-systèmes (4A, 4B) sur lesquels les activités sont autorisées à être exécutées, d'après la liste (70) de numéros de série (SNA, SNB) des sous-systèmes (4A, 4B) constitutifs du système (2) comportent des moyens de comparer le numéro de série (SNA) du sous-système (4A) sur lequel une activité (A1) est autorisée à être exécutée, identifié d'après le numéro de série étendu (SN/ext) de l'activité, avec uniquement le numéro de série (SNA, SNB) du sous-système (4A, 4B) sur lequel l'activité (A1) est en cours d'initialisation, de façon à empêcher l'exécution (150) de l'activité sur un autre sous-système (4B) que celui initialement autorisé (4A).

## Patentansprüche

1. Verfahren zur Verwaltung mehrfacher Aktivitäten, die auf mindestens einem Bereich (P1, P2, P3) von Hardware-Datenverarbeitungsbetriebsmitteln ausgeführt werden, der auf mindestens einer Mehrfachzellen-Datenverarbeitungsplattform (4A, 4B) eines Multiprozessorsystems (2) konfiguriert ist, wobei jede Betriebsaktivität mindestens ein Betriebssystem aufweist, das die Datenverarbeitungsbetriebsmittel des Bereichs, auf dem sie auszuführen ist, steuern kann, und die Mehrfachzellen-Datenverarbeitungsplattform (4A, 4B) mehrere getrennte Bereiche (P1, P2, P3) von Hardware-Datenverarbeitungsbetriebsmitteln aufweist, die nacheinander oder gleichzeitig auf der Plattform (4A, 4B) aktiviert werden können, **dadurch gekennzeichnet, dass** das Verfahren folgende Schritte umfasst:
- Identifizieren (132) einer beim Initialisieren (130) befindlichen Aktivität (A1) auf einem Bereich (P1, P2, P3) des Systems (2) mit einem Verwaltungswerkzeug (9) des Systems (2) aufgrund einer erweiterten Seriennummer (SN/ext), die in Speichermitteln (112) des Verwaltungswerkzeugs (9) gespeichert ist und einerseits eine Seriennummer (SNA) eines Subsystems (4A), auf dem das Ausführen (150) der Aktivität (A1) gestattet ist, und andererseits eine Erweiterung der Seriennummer umfasst, die der Aktivität (A1) zugeordnet ist,
- Authentifizieren (134) der Seriennummer (SNA) des Subsystems (4A) als zum System zugehörig, auf dem das Ausführen (150) der Aktivität (A1) gestattet ist,
- Überprüfen (136) der erweiterten Seriennummern (SN/ext) der Aktivitäten, die sich auf den verschiedenen Subsystemen (4A, 4B), die Bestandteil des Systems (2) sind, beim Ausführen (150) befinden,
- Ablegen (138) der erweiterten Seriennummer (SN/ext) als Aktivitätslizenz in den Arbeitsspeichern (44) der Hardware-Datenverarbeitungsbetriebsmittel des Subsystems (4A, 4B), in dem der Bereich (P1, P2, P3) konfiguriert ist, auf dem sich die Aktivität (A1) bei der Initialisierung befindet.

2. Verfahren nach Anspruch 1, **dadurch gekennzeichnet, dass** nach dem Ausführen der Verfahrensschritte die Aktivitäten, die einen Lizenzverwaltungsmechanismus benötigen, der mindestens einen Seriennummer erfordert, einen Schritt (140) zum Überprüfen der Authentizität der Aktivitätslizenz ausführen, wobei dieser Schritt (140) darin besteht, mit den Hardware-Datenverarbeitungsbetriebsmitteln des Subsystems (4A), in dem der Bereich (P1) konfiguriert ist, auf dem sich die Aktivität (A1) bei der Initialisierung befindet, die erweiterte Seriennummer (SN/ext), die in den Arbeitsspeichern (44) der Hardware-Datenverarbeitungsbetriebsmittel des Subsystems (4A), in dem der Bereich (P1) konfiguriert ist, auf dem sich die Aktivität (A1) bei der Initialisierung befindet, als Aktivitätslizenz abgelegt ist (138), mit der internen Lizenznummer der Software zu vergleichen, wobei dieser Vergleich entweder das Ausführen (150) der Aktivität (A1) bei einer Übereinstimmung dieser beiden Lizenzen oder die Unterbrechung (160) der Initialisierung der Aktivität (A1) bei einer fehlenden Übereinstimmung ermöglicht.

3. Verfahren nach einem der Ansprüche 1 und 2, **dadurch gekennzeichnet, dass** es einen vorhergehenden Schritt (170) umfasst, bei dem jeder der Aktivitäten, die auf Bereichen (P1, P2, P3) des Systems (2) auszuführen sind, eine erweiterte Seriennummer (SN/ext) zugeordnet wird aufgrund von Erfassungen (172) von Befehlen, die von einer Bedienperson an Erfassungsmitteln (91) und Anzeigemitteln (92) des Verwaltungswerkzeugs (9) des Systems (2) vorgenommen werden, wobei mit diesen Befehlen folgende Schritte umgesetzt werden:
- Kopieren (174) der Seriennummer (SNA, SNB) jedes Subsystems (4A, 4B), auf dem die Aktivitäten auszuführen sind,
- Auswählen einer dieser Seriennummern für jede der Aktivitäten und Zuordnen (176) einer Erweiterung zu jeder der Aktivitäten,
- Hinzufügen (178) der Erweiterungen zu den ausgewählten Seriennummern (SNA, SNB), um erweiterte Seriennummern (SN/ext) zu erhalten, die jeder Aktivität zugeordnet werden,
- Ablegen (180) der jeder Aktivität zugeordneten erweiterten Seriennummern (SN/ext) in einem Konfigurationsspeicher (72), der in den Speichermitteln (112) des Verwaltungswerkzeugs (9) des Systems (2) abgespeichert ist, beim Installieren der Aktivität (A1) auf dem System (2).

4. Verfahren nach einem der Ansprüche 1 bis 3, **dadurch gekennzeichnet, dass** es einen vorangehenden Schritt umfasst, bei dem bei den Herstellern von Software (20, 22, 24, 26), die einen Lizenzverwaltungsmechanismus auf Basis des Prinzips der Seriennummer für die Ausführung (150) von Aktivitäten in Systemen (2) benötigen, die erweiterten Seriennummern (SN/ext) angegeben werden, die den Aktivitäten zugeordnet sind (170), die auf Bereichen (P1, P2, P3) des Systems (2) auszuführen sind, wobei die Hersteller dann für den Schritt (140) zum Überprüfen der Authentizität der Lizenzen der Aktivitäten diese angegebenen Nummern (SN/ext) in die Berechnung der internen Lizenzen der Software (20, 22, 24, 26) implementieren können.

5. Verfahren nach einem der Ansprüche 1 bis 4, **dadurch gekennzeichnet, dass** es einen vorhergehenden Schritt umfasst, bei dem das System (2) aufgrund der Erfassungsmittel (91) und der Anzeigemittel (92) des Verwaltungswerkzeugs (9) des Systems (2) konfiguriert wird durch Erfassung durch eine Bedienperson, die mit einem Konfigurationsmodul (102) des Verwaltungswerkzeugs (9) des Systems (2) die Aktivitäten definiert, die auf den verschiedenen Bereichen (P1, P2, P3) des Systems (2) auszuführen sind, wobei die Initialisierung mindestens einer Aktivität (A1) dann in einem Bereich (P3) erfolgen kann, der Hardware-Datenverarbeitungsbetriebsmittel aufweist, die zu einem Subsystem (4B) gehören, das sich von dem Subsystem (4A) unterscheidet, das der der Aktivität (A1) zugeordneten erweiterten Seriennummer (SN/ext) entspricht.

6. Verfahren nach einem der Ansprüche 1 bis 5, **dadurch gekennzeichnet, dass** der Schritt (134) zum Authentifizieren des Subsystems (4A), auf dem das Ausführen (150) der Aktivität (A1) gestattet ist, darin besteht, mit einem in den Verarbeitungsmitteln (100) des Verwaltungswerkzeugs (9) des Systems (2) vorhandenen Authentifizierungsmodul (106) die Seriennummer (SNA) des Subsystems (4A), das anhand der erweiterten Seriennummer (SN/ext) der Aktivität (A1) identifiziert wurde, mit einer Liste (70) von Seriennummern (SNA, SNB) der das System (2) bildenden Subsysteme (4A, 4B) zu vergleichen, wobei diese Liste (70) von Seriennummern der Subsysteme (SNA, SNB) in Speichermitteln (112) des Verwaltungswerkzeugs (9) des Systems (2) gespeichert ist und aufgrund dieses Vergleichs entweder die Unterbrechung (160) der Initialisierung der Aktivität, wenn die Seriennummer (SNA) des Subsystems (4A), auf dem diese Aktivität (A1) ausgeführt werden darf, in dieser Liste (70) nicht vorhanden ist, oder im gegenteiligen Fall eine Fortführung der Ausführung des Verfahrens ermöglicht wird.

7. Verfahren nach einem der Ansprüche 1 bis 6, **dadurch gekennzeichnet, dass** der Schritt (136) zum Überprüfen der erweiterten Seriennummern (SN/ext) der im System (2) beim Ausführen (150) befindlichen Aktivitäten darin besteht, mit einem Modul (108) zum Überprüfen der laufenden Aktivitäten, das in den Verarbeitungsmitteln (100) des Verwaltungswerkzeugs (9) des Systems (2) vorhanden ist, die erweiterte Seriennummer (SN/ext) der beim Initialisieren (130) befindlichen Aktivität (A1) mit mehreren erweiterten Seriennummern (SN/ext) von im System (2) beim Ausführen befindlichen Aktivitäten zu vergleichen, wobei diese Pluralität entweder die Unterbrechung (160) der Initialisierung der Aktivität durch die Verarbeitungsmittel des Verwaltungswerkzeugs (9) des Systems (2) ermöglicht, wenn die erweiterte Seriennummer (SN/ext) der beim Initialisieren befindlichen Aktivität bereits für das Ausführen (150) einer Aktivität (A1) auf einem der Bereiche (P1, P2, P3) verwendet wird, die auf dem System (2) konfiguriert sind, oder im gegenteiligen Fall eine Fortführung der Ausführung des Verfahrens ermöglicht.

8. Verfahren nach einem der Ansprüche 1 bis 7, **dadurch gekennzeichnet, dass** das Verfahren von einer Verwaltungssoftware (PAM) des Multiprozessorsystems (2) angewandt wird, die bei den Verarbeitungsmitteln (100) des Verwaltungswerkzeugs (9) des Systems (2) durchgeführt wird und die Hardwarekonfiguration des Systems (2) steuert, indem in Abhängigkeit von den Befehlen einer Bedienperson, die mit den Erfassungsmitteln (91) und den Anzeigemitteln (92) des Verwaltungswerkzeugs (9) des Systems erfasst werden, Bereiche (P1, P2, P3) in das System (2) bildenden Subsystemen (4A, 4B) hergestellt werden, wobei es mit dieser Verwaltungssoftware (PAM) möglich ist, mit Schnittstellenkarten (46a, 46b) die Nutzung der Hardware-Datenverarbeitungsbetriebsmittel der Subsysteme (4A, 4B), die das System bilden, zu kontrollieren und die Initialisierung (130) von Aktivitäten auf den Bereichen (P1, P2, P3), die auf dem System (2) konfiguriert sind, mit den erweiterten Seriennummern (SN/ext) dieser Aktivitäten zu kontrollieren.

9. Verfahren nach einem der Ansprüche 1 bis 8, **dadurch gekennzeichnet, dass** der Schritt (138), bei dem die erweiterte Seriennummer (SN/ext) als Aktivitätslizenz in den Arbeitsspeichern (44) der Hardware-Datenverarbeitungsbetriebsmittel des Subsystems (4A), in dem der Bereich (P1) konfiguriert ist, auf dem sich die Aktivität (A1) bei der Initialisierung befindet, gespeichert wird, aus einem vorangehenden Schritt besteht, bei dem das Erfordernis einer Aktivitätslizenz für die Ausführung dieser Aktivität überprüft wird, und falls diese erforderlich ist, aus einem Schritt besteht, bei dem die Stelle bestimmt wird, an der die erweiterte Seriennummer als Aktivitätslizenz gespeichert werden muss, und bei dem die erweiterte Seriennummer (SN/ext) von einem Speichermodul (110) in einer Schnittstellentabelle für den Zugang zu den Hardware-Datenverarbeitungsbetriebsmitteln des Subsystems (4A) an der vorbestimmten Stelle abgespeichert wird, die entweder einem spezifischen Feld entspricht, wenn die Aktivität (A1) die Definition einer Adresse für die Überprüfung (140) der Lizenz ermöglicht, oder einem Feld der Schnittstellentabelle für den Zugang zu den Betriebsmitteln, das herkömmlicherweise von den Aktivitäten verwendet und als Standardfeld bezeichnet wird, wenn die Aktivität die Ersetzung der Seriennummer (SNA) des Subsystems (4A), in dem der Bereich (P1) konfiguriert ist, durch die erweiterte Seriennummer (SN/ext) der Aktivität (A1) in diesem Standardfeld der Schnittstellentabelle für den Zugang zu den Hardware-Datenverarbeitungsbetriebsmitteln des Subsystems (4A) erfordert.

10. Verfahren nach einem der Ansprüche 5 bis 9, **dadurch gekennzeichnet, dass** der Schritt (170), bei dem den Aktivitäten erweiterte Seriennummern (SN/ext) zugeordnet werden, mit der Bildung durch ein in den Verarbeitungsmitteln (100) des Verwaltungswerkzeugs (9) des Systems (2) vorhandenes Modul (104) zur Identitätsbildung von als "Identitätsobjekten" (ID) bezeichneten Objekten zusammenhängt, wobei die Variablen dieser Identitätsobjekte (ID) Informationen zur Ausführung (150) der Aktivität (A1) in den Bereichen (P1, P2, P3), die auf dem System (2) konfiguriert sind, entsprechen, wie etwa dem Namen der Aktivität, dem Erfordernis eines Lizenzverwaltungsmechanismus, der erweiterten Seriennummer (SN/ext), die der Aktivität (A1) zugeordnet ist, oder der Stelle, an der diese erweiterte Seriennummer (SN/ext) vor dem Ausführen der Aktivität abgespeichert werden muss, wobei der Schritt zum Konfigurieren des Systems, der mit dem Konfigurationsmodul (102) des Verwaltungswerkzeugs (9) des Systems (2) ausgeführt wird, mit der Bildung von als "Domainobjekten" (D1, D2, D3) bezeichneten Objekten zusammenhängt, deren Variablen Informationen bezüglich der Definition von Bereichen (P1, P2, P3) und bezüglich Aktivitäten entsprechen, die auf jedem der Bereiche (P1, P2, P3), die auf dem System (2) konfiguriert sind, auszuführen sind, wobei diese Identitätsobjekte (ID) und diese Domainobjekte (D1, D2, D3) im Konfigurationsspeicher (72) abgelegt werden, der in den Speichermitteln (112) des Verwaltungswerkzeugs (9) des Systems (2) gespeichert sind.

11. Verfahren nach einem der Ansprüche 1 bis 10, **dadurch gekennzeichnet, dass** der Schritt (134) zum Authentifizieren des Subsystems (4A), auf dem die Ausführung (150) der Aktivität (A1) gestattet ist, auch aus einem Vergleich durch das Authentifizierungsmodul (106) der Seriennummer (SNA) des Subsystems (4A), das anhand der erweiterten Seriennummer (SN/ext) der Aktivität identifiziert wurde, lediglich mit der Seriennummer (SNA, SNB) des Subsystems (4A, 4B), auf dem sich die Aktivität (A1) bei der Initialisierung befindet, bestehen kann, wobei dieser Vergleich das Ausführen (150) der Aktivität auf einem anderen Subsystem (4B) als dem ursprünglich autorisierten Subsystem (4A) verhindert.

12. System (2) zur Verwaltung der Ausführung mehrfacher Aktivitäten, das mindestens ein Subsystem (4A, 4B) mit Multiprozessoren aufweist, das eine Mehrfachzellen-Datenverarbeitungsplattform von Hardware-Betriebsmitteln bildet, wobei ein Verwaltungswerkzeug (9) des Systems ein Konfigurationsmodul (102) aufweist, um Bereiche (P1, P2, P3) von Hardware-Datenverarbeitungsbetriebsmitteln zu definieren und gleichzeitig oder nacheinander diese Bereiche auf der Plattform (4A, 4B) zu aktivieren, wobei jeder Bereich eine oder mehrere Rechenzellen (30, 32, 34, 36) und gemeinsame Betriebsmittel (8) mit Mitteln (10, 12, 14, 16) zum Speichern der Aktivitäten aufweist, wobei jede Aktivität mindestens ein Betriebssystem aufweist, mit dem die Datenverarbeitungsbetriebsmittel des Bereichs (P1, P2, P3), auf dem sie auszuführen ist, gesteuert werden können, **dadurch gekennzeichnet, dass** es Folgendes umfasst:
• Speichermittel (112) des Verwaltungswerkzeugs (9) des Systems, die zum einen eine Liste (70) aus Seriennummern (SNA, SNB) speichern, die jeweils einem der das System bildenden Subsysteme (4A, 4B) entsprechen, und zum anderen einen Konfigurationsspeicher (72), der mehrere erweiterte Seriennummern (SN/ext) enthält, die jeweils einerseits eine Seriennummer (SNA) eines Subsystems (4A, 4B), auf dem das Ausführen (150) einer Aktivität (A1) gestattet ist, und andererseits eine Erweiterung der Seriennummer, die der Aktivität (A1) zugeordnet ist, umfassen,
• Verarbeitungsmittel (100) des Verwaltungswerkzeugs (9) des Systems (2) mit:
- einem Modul (106) zur Authentifizierung von Subsystemen, das anhand der in den Speichermitteln (112) des Verwaltungswerkzeugs (9) gespeicherten Liste (70) der Seriennummern (SNA, SNB) der Subsysteme (4A, 4B), die das System (2) bilden, die Subsysteme (4A, 4B) authentifiziert, auf denen die Aktivitäten ausgeführt werden dürfen,
- ein Modul (108) zum Überprüfen der erweiterten Seriennummern (SN/ext) der sich bei der Ausführung befindlichen Aktivitäten auf den im System (2) konfigurierten Bereichen anhand mehrerer erweiterter Seriennummern von Aktivitäten, die im System gerade verwendet werden, und
- ein Modul (110) zum Ablegen der erweiterten Seriennummern (SN/ext) als Aktivitätslizenzen in Arbeitsspeichern (44) der Hardware-Datenverarbeitungsbetriebsmittel des Subsystems (4A, 4B), in dem der Bereich (P1, P2, P3) konfiguriert ist, auf dem sich die Aktivität (A1) bei der Initialisierung befindet.

13. System nach Anspruch 12, **dadurch gekennzeichnet, dass** es Erfassungsmittel (91) und Anzeigemittel (92) aufweist, damit eine Bedienperson jeder der Aktivitäten, die auf Bereichen (P1, P2, P3) des Systems (2) ausgeführt werden sollen, eine erweiterte Seriennummer (SN/ext) zuweisen kann, indem die Seriennummer (SNA, SNB) jedes der Subsysteme (4A, 4B), auf denen die Aktivitäten ausgeführt werden sollen, kopiert werden und anschließend für jede dieser Aktivitäten eine dieser Seriennummern (SNA, SNB) ausgewählt wird und zu dieser eine Erweiterung hinzugefügt wird, um eine erweiterte Seriennummer (SN/ext) zu erhalten, und indem die so jeder der Aktivitäten zugewiesenen erweiterten Seriennummern (SN/ext) im Konfigurationsspeicher (72) abgelegt wird, der in den Speichermitteln (112) des Verwaltungswerkzeugs (9) des Systems (2) gespeichert ist.

14. System nach einem der Ansprüche 12 und 13, **dadurch gekennzeichnet, dass** das Verwaltungswerkzeug (9) des Systems (2) ein Konfigurationsmodul (102) aufweist, das Mittel aufweist, mit denen aufgrund von Mitteln zur Bildung von als "Domainobjekten" (D1, D2, D3) bezeichneten Objekten, wobei die gebildeten Domainobjekte Variablen umfassen, die Informationen zur Definition von Bereichen (P1, P2, P3) und zu auf jedem der Bereiche (P1, P2, P3), die auf dem System (2) konfiguriert sind, auszuführenden Aktivitäten entsprechen, die auf den verschiedenen Bereichen (P1, P2, P3) des Systems (2) auszuführenden Aktivitäten mit Mitteln zur Initialisierung mindestens einer Aktivität (A1) auf einem Bereich (P3) definiert werden, wobei dieser Bereich (P3) Hardware-Datenverarbeitungsbetriebsmittel aufweisen kann, die zu einem Subsystem (4B) gehören, das sich von dem Subsystem (4A) unterscheidet, das der der Aktivität (A1) zugewiesenen erweiterten Seriennummer (SN/ext) entspricht, wobei das Konfigurationsmodul (102) auch Mittel zur Bildung von als "Identitätsobjekten" (ID) bezeichneten Objekten über ein Identitätsbildungsmodul (104) aufweist, wobei die Variablen dieser Identitätsobjekte (ID) Informationen zur Ausführung (150) der Aktivität (A1) in den Bereichen (P1, P2, P3), die auf dem System (2) konfiguriert sind, entsprechen, wie etwa dem Namen der Aktivität, dem Erfordernis eines Lizenzverwaltungsmechanismus, der erweiterten Seriennummer (SN/ext), die der Aktivität (A1) zugeordnet ist, oder der Stelle, an der diese erweiterte Seriennummer vor dem Ausführen der Aktivität abgespeichert werden muss, wobei diese Identitätsobjekte (ID) und diese Domainobjekte (D1, D2, D3) im Konfigurationsspeicher (72) abgelegt werden, der in den Speichermitteln (112) des Verwaltungswerkzeugs (9) des Systems (2) gespeichert ist.

15. System nach einem der Ansprüche 12 bis 14, **dadurch gekennzeichnet, dass** die Hardware-Datenverarbeitungsbetriebsmittel der Subsysteme (4A, 4B), in denen die Bereiche (P1, P2, P3) konfiguriert sind, auf denen sich die Aktivitäten bei der Initialisierung befinden, Mittel für den Zugang zu Schnittstellentabellen aufweisen, die in den Arbeitsspeichern (44) dieser Hardware-Datenverarbeitungsbetriebsmittel gespeichert sind, wobei die erweiterten Seriennummern (SN/ext) von dem Speichermodul (110) als Aktivitätslizenzen in diesen Schnittstellentabellen gespeichert werden, sowie Mittel zum Vergleichen dieser Aktivitätslizenzen mit internen Lizenznummern der für diese Aktivitäten verantwortlichen Software, und Mittel, die die Ausführung (150) dieser Aktivitäten bei einer Übereinstimmung zwischen diesen Aktivitätslizenzen und diesen internen Lizenznummern gestatten oder die Initialisierung der Aktivität (A1) bei einer fehlenden Übereinstimmung unterbrechen (160).

16. System nach einem der Ansprüche 12 bis 15, **dadurch gekennzeichnet, dass** die Verarbeitungsmittel (100) des Verwaltungswerkzeugs (9) des Systems (2) eine Verwaltungssoftware (PAM) des Systems ausführen, mit der die Hardwarekonfiguration des Systems gesteuert wird, indem Datenverarbeitungsbereiche (P1, P2, P3) in den das System (2) bildenden Subsystemen (4A, 4B) in Abhängigkeit von den Befehlen einer Bedienperson hergestellt werden, welche mit den Erfassungsmitteln (91) und den Anzeigemitteln (92) des Systems erfasst werden, wobei es mit dieser Verwaltungssoftware (PAM) möglich ist, mit Standardschnittstellenkarten (46a, 46b) die Zugänge zu den Hardware-Betriebsmitteln des Systems zu kontrollieren und die Initialisierung von Aktivitäten auf den Bereichen (P1, P2, P3) des Systems zu kontrollieren, indem die Zusammenwirkung der verschiedenen Module und Mittel des Systems (2) kontrolliert wird.

17. System nach einem der Ansprüche 12 bis 16, **dadurch gekennzeichnet, dass** die Verarbeitungsmittel (100) des Verwaltungswerkzeugs (9) des Systems (2) Mittel zum Überprüfen der Notwendigkeit von Lizenzverwaltungsmechanismen für jede Aktivität und Mittel zur Bestimmung der Stelle, an der die erweiterte Seriennummer vor dem Ausführen der Aktivität abgelegt werden muss, umfassen, wobei diese Mittel das Ablegen der erweiterten Seriennummer (SN/ext) als Aktivitätslizenz durch das Speichermodul (110) an der bestimmten Stelle in den Schnittstellentabellen für den Zugang zu den Hardware-Betriebsmitteln ermöglichen, die in den Arbeitsspeichern (44) der Subsysteme (4A, 4B) gespeichert sind, in denen die Bereiche (P1, P2, P3) konfiguriert sind, auf denen sich die Aktivitäten bei der Initialisierung befinden.

18. System nach einem der Ansprüche 12 bis 17, **dadurch gekennzeichnet, dass** das Modul (106) zur Authentifizierung der Subsysteme (4A, 4B), auf denen die Aktivitäten entsprechend der Liste (70) der Seriennummern (SNA, SNB) der das System (2) bildenden Subsysteme (4A, 4B) ausgeführt werden dürfen, Mittel aufweist, mit denen die Seriennummer (SNA) des Subsystems (4A), auf dem eine Aktivität (A1) ausgeführt werden kann und das entsprechend der erweiterten Seriennummer (SN/ext) der Aktivität identifiziert wurde, lediglich mit der Seriennummer (SNA, SNB) des Subsystems (4A, 4B) verglichen wird, auf dem sich die Aktivität (A1) bei der Initialisierung befindet, so dass die Ausführung (150) der Aktivität auf einem anderen Subsystem (4B) als das ursprünglich autorisierte Subsystem (4A) verhindert wird.

## Claims

1. Method for management of multiple activities executed on at least one computer hardware resource perimeter (P1, P2, P3) configured on at least one multicellular computer platform (4A, 4B) of a multiple processor system (2), each operational activity containing at least one operating system capable of managing the computer resources of the perimeter on which it is intended to be executed, and the multicellular computer platform (4A, 4B) having several distinct computer hardware resource perimeters (P1, P2, P3) that can be activated successively or simultaneously on the platform (4A, 4B), **characterised in that** the method includes the following steps:
- identification (132) of an activity (A1) in the process of initialisation (130) on a perimeter (P1, P2, P3) of the system (2), by an administration tool (9) of the system (2), by means of an extended serial number (SN/ext), held in storage resources (112) of the administration tool (9) and containing, on the one hand, a serial number (SNA) of a subsystem (4A) on which the execution (150) of the activity (A1) is authorised and, on the other hand, an extension of the serial number, attributed to the activity (A1),
- authentication (134) of the serial number (SNA) of the subsystem (4A) as belonging to the system and on which the execution (150) of the activity (A1) is authorised,
- verification (136) of the extended serial numbers (SN/ext) of the activities in the process of execution (150) on the different subsystems (4A 4B) making up the system (2),
- recording (138) of the extended serial number (SN/ext), as an activity licence, in working memories (44) of the computer hardware resources of the subsystem (4A, 4B) in which the perimeter (P1, P2, P3), on which the activity (A1) is in the process of initialisation, is configured.

2. A method according to claim 1, **characterised in that**, following the implementation of the steps of the method, the activities that require a licence management mechanism requiring at least one serial number execute a step (140) for verifying the authenticity of the activity licence, this step(140) consisting of a comparison, by the computer hardware resources of the subsystem (4A) in which the perimeter (P1), on which the activity (A1) is in the process of initialisation, is configured, of the extended serial number (SN/ext), recorded (138), as an activity licence, in the working memories (44) of the computer hardware resources of the subsystem (4A) in which the perimeter (P1) on which the activity (A1) is in the process of initialisation is configured, with the internal licence number of the program, this comparison allowing either the execution (150) of the activity (A1) when there is agreement between these two licences, or the interruption (160) of the initialisation of the activity (A1) when there is no agreement.

3. A method according to claims 1 and 2, **characterised in that** it includes a preliminary step (170) for the attribution of an extended serial number (SN/ext) to each of the activities intended to be executed on perimeters (P1, P2, P3) of the system (2), through the entry (172) of commands, effected by an operator, on input means (91) and display means (92) of the administration tool (9) of the system (2), these commands implementing the following steps:
- copying (174) of the serial number (SNA, SNB) of each of the subsystems (4A, 4B) on which the activities are intended to be executed,
- selection of one of these serial numbers for each of the activities and attribution (176) of an extension to each of the activities.
- addition (178) of the extensions to the selected serial numbers (SNA, SNB) so as to obtain the extended serial numbers (SN/ext) attributed to each of the activities,
- recording (180) of the extended serial numbers (SN/ext), attributed to each of the activities, in a configuration memory (72), held in the storage means (112) of the administration tool (9) of the system (2), during the installation of the activity (A1) on the system (2).

4. A method according to one of claims 1 to 3, **characterised in that** it includes a preliminary step for declaration, with the manufacturers of software (20, 22, 24, 26) necessitating a licence management mechanism based on the serial number principle for the execution (150) of activities in the systems (2), of the extended serial numbers (SN/ext) attributed (170) to the activities intended to be executed in the perimeters (P1, P2, P3) of the system (2), the manufacturers thus being allowed to implement these declared numbers (SN/ext) in the calculation of the internal licences of the software (20, 22, 24, 26), for the step (140) for verifying the authenticity of the licences of the activities.

5. A method according to one of claims 1 to 4, **characterised in that** it includes a preliminary step for the configuration of the system (2), through the input means (91) and display means (92) of the administration tool (9) of the system (2), through entry by an operator who specifies, by means of a configuration module (102) of the administration tool (9) of the system (2), the activities to be executed on the different perimeters (P1, P2, P3) of the system (2), to allow the initialisation of at least one activity (A1) on a perimeter (P3) including computer hardware resources belonging to a subsystem (4B) other than the subsystem (4A) corresponding to the extended serial number (SN/ext) attributed to the activity (A1).

6. A method according to one of claims 1 to 5, **characterised in that** the authentication step (134) of the subsystem (4A) on which the execution (150) of the activity (A1) is authorised consists of a comparison, by an authentication module (106) present in the processing means (100) of the administration tool (9) of the system (2), of the serial number (SNA) of the subsystem (4A) identified by the extended serial number (SN/ext) of the activity (A1), with a list (70) of serial numbers (SNA, SNB) of the subsystems (4A, 4B) making up the system (2), this list (70) of serial numbers of the subsystems (SNA, SBA) being held in storage means (112) of the administration tool (9) of the system (2) and allowing, by means of this comparison, either the interruption (160) of the initialisation of the activity, when the serial number (SNA) of the subsystem (4A) on which this activity (A1) is authorised to be executed is not present in this list (70), or otherwise, a continued implementation of the method.

7. A method according to one of claims 1 to 6, **characterised in that** the step (136) for verification of the extended serial numbers (SN/ext) of the activities in the process of execution (150) in the system (2) consists of a comparison, by a module (108) for verifying the current activities present in the processing means (100) of the administration tool (9) of the system (2), of the extended serial number (SN/ext) of the activity (A1) in the process of initialisation (130) with a plurality of extended serial numbers (SN/ext) of activities in the process of execution in the system (2), this plurality allowing either the interruption (160) of the initialisation of the activity, by the processing means of the administration tool (9) of the system (2), when the extended serial number (SN/ext) of the activity in the process of initialisation is already being used for the execution (150) of an activity (A1) on one of the perimeters (P1, P2, P3) configured on the system (2), or otherwise, a continued implementation of the method.

8. A method according to one of claims 1 to 7, **characterised in that** the method is implemented by an administration program (PAM) of the multiple processor system (2), executed on the processing means (100) of the administration tool (9) of the system (2) and managing the configuration hardware of the system (2), by establishing perimeters (P1, P2, P3) in subsystems (4A, 4B) making up the system (2), in accordance with the commands of an operator, entered through the input means (91) and display means (92) of the administration tool (9) of the system, this administration program (PAM) is used to control, by means of interface cards (46a, 46b), the operation of the computer hardware resources of the subsystems (4A, 4B) making up the system and to control the initialisation (130) of activities on the perimeters (P1, P2, P3) configured on the system (2), by means of the extended serial numbers (SN/ext) of these activities.

9. A method according to one of claims 1 to 8, **characterised in that** the step (138) for recording of the extended serial number (SN/ext) as an activity licence, in the working memories (44) of the computer hardware resources of the subsystem (4A) in which the perimeter (P1) on which the activity (A1) is in the process of initialisation is configured, consists of a preliminary step for verifying the need for an activity licence for the execution of this activity and, if required, of a step for determining the location at which the extended serial number must be recorded as an activity licence, then of recording the extended serial number (SN/ext), by a recording module (100), in an interface table for access to the computer hardware resources of the subsystem (4A), at the determined location, corresponding either to a specific field, when the activity (A1) allows the specification of an address for verification (140) of the licence, or to a field of the interface table for access to resources typically used by the activities, known as standard field, when the activity requires the replacement of the serial number (SNA) of the subsystem (4A) in which the perimeter (P1) is configured, by the extended serial number (SN/ext) of the activity (A1), in this standard field of the interface table for access to the computer hardware resources of the subsystem (4A).

10. A method according to one of claims 5 to 9, **characterised in that** the step (170) for the attribution of extended serial numbers (SN/ext) to the activities is associated with a creation of objects, known as "identity objects" (ID), by an identity creation module (104) present in the processing means (100) of the administration tool (9) of the system (2), the variables of these identity objects (ID) corresponding to information relating to the execution (150) of the activity (A1) in the perimeters (P1, P2, P3) configured on the system (2), such as the name of the activity, the need for a licence management mechanism and the extended serial numbers (SN/ext) attributed to the activity (A1), as well as the location at which this extended serial number (SN/ext) must be recorded before the execution of the activity, the step for configuration of the system, effected by means of the configuration module (102) of the administration tool (9) of the system (2), being associated with the creation of objects known as "domain objects" (D1, D2, D3) the variables of which correspond to information relating to the specification of perimeters (P1, P2, P3) and to activities to be executed on each of the perimeters (P1, P2, P3) configured on the system (2), these identity objects (ID) and these domain objects (D1, D2, D3) being recorded in the configuration memory (72) held in the storage means (112) of the administration tool (9) of the system (2).

11. A method according to one of claims 1 to 10, **characterised in that** the authentication step (134) of the subsystem (4A) on which the execution (150) of the activity (A1) is authorised can also consist of a comparison, by the authentication module (106), of the serial number (SNA) of the subsystem (4A) identified by the extended serial number (SN/ext) of the activity, with only the serial number (SNA, SNB) of the subsystem (4A, 4B) on which the activity (A1) is in the process of initialisation, this comparison preventing the execution (150) of the activity on a subsystem (4B) other than that initially authorised (4A).

12. A system (2) for management of the execution of multiple activities, having at least one subsystem (4A, 4B) with multiple processors constituting a multicellular computer platform of hardware resources, an administration tool (9) of the system having a configuration module (102) to specify perimeters (P1, P2, P3) of computer hardware resources and to simultaneously or successively activate these perimeters on the platform (4A, 4B), each perimeter having one or more computer cells (30, 32, 34, 36), of the common resources (8) comprising means (10, 12, 14, 16) for storage of the activities, each activity containing at least one operating system capable of managing the computer resources of the perimeter (P1, P2, P3) on which it is intended to be executed, **characterised in that** it includes:
• storage means (112) of the administration tool (9) of the system storing, on the one hand, a list (70) of serial numbers (SNA, SNB) each corresponding to one of the subsystems (4A, 4B) making up the system and, on the other hand, a configuration memory (72) containing a plurality of extended serial numbers (SN/ext) each comprising, on the one hand, a serial number (SNA) of a subsystem (4A, 4B) on which the execution (150) of an activity (A1) is authorised and, on the other hand, an extension of the serial number, attributed to the activity (A1),
• processing means (100) of the administration tool (9) of the system (2) having:
- a subsystem authentication module (106), authenticating the subsystems (4A, 4B) on which activities are authorised to be executed, according to the list (70) of the serial numbers (SNA, SNB) of the subsystems (4A, 4B) making up the system (2), held in the storage means (112) of the administration tool (9),
- a module (108) for verifying the extended serial numbers (SN/ext) of the activities in the process of execution on the perimeters configured in the system (2), according to a plurality of extended serial numbers of activities being used in the system , and
- a module (11) for recording the extended serial numbers (SN/ext) as activity licences, in working memories (44) of the computer hardware resources of the subsystem (4A, 4B) in which the perimeter (P1, P2, P3), on which the activity (A1) is in the process of initialisation, is configured.

13. A system according to claim 12, **characterised in that** it includes input means (91) and display means (92) to enable an operator to attribute an extended serial number (SN/ext) to each of the activities intended to be executed on perimeters (P1, P2, P3) of the system (2), by copying the serial number (SNA, SNB) of each of the subsystems (4A, 4B) on which the activities are intended to execute, then by selecting one of these serial numbers, for each of these activities, the one of these serial numbers (SNA,SNB) and adding an extension to it, to obtain an extended serial number (SN/ext), and by recording the extended serial numbers (SN/ext) thus attributed to each of the activities in the configuration memory (72) held in the storage means (112) of the administration tool (9) of the system (2).

14. A system according to one of claims 12 and 13, **characterised in that** the administration tool (9) of the system (2) includes a configuration module (102) having means to specify the activities to be executed on the different perimeters (P1, P2, P3) of the system (2), by means for the initialisation of at least one activity (A1) on a perimeter (P3), this perimeter (P3) being able to include computer hardware resources belonging to a subsystem (4B) other than the subsystem (4A) corresponding to the extended serial number (SN/ext) attributed to the activity (A1), by means of means for the creation of objects known as "domain objects" (D1, D2, D3) in which the domain objects created have variables corresponding to information relating to the specification of perimeters (P1, P2, P3) and to activities to be executed on each of the perimeters (P1, P2, P3) configured on the system (2), the configuration module (102) also having means for the creation of objects, known as "identity objects" (ID), by an identity creation module (104), the variables of these identity objects (ID) corresponding to information relating to the execution (150) of the activity (A1) in the perimeters (P1, P2, P3) configured on the system (2), such as the name of the activity, the need for a licence management mechanism and the extended serial number (SN/ext) attributed to the activity (A1), as well as the location at which this extended serial number must be recorded before the execution of the activity, these identity objects (ID) and these domain objects (D1, D2, D3) being recorded in the configuration memory (72) held in the storage means (112) of the administration tool (9) of the system (2).

15. A system according to one of claims 12 to 14, **characterised in that** the computer hardware resources of the subsystems (4A, 4B), in which the perimeters (P1, P2, P3) on which the activities are in the process of initialisation are configured, comprise means to access interface tables held in the working memories (44) of these computer hardware resources, the extended serial numbers (SN/ext) being recorded as activity licences, by the recoding module (11), in these interface tables, means for comparison of these activity licences with internal licence numbers of the programs responsible for these activities, and means for authorisation of the execution (150) of these activities in the event of agreement between these activity licences and these internal licence numbers or for interruption (160) of the initialisation of the activity (A1) where there is no agreement.

16. A system according to one of claims 12 to 15, **characterised in that** the processing means (100) of the administration tool (9) of the system (2) execute an administration program (PAM) of the system managing the configuration hardware of the system by establishing computer perimeters (P1, P2, P3) in the subsystems (4A, 4B) making up the system (2), in accordance with the commands of an operator, entered through the input means (91) and display means (92) of the system, this administration program (PAM) being used to control, by means of standard interface cards (46a, 46b), the access to the hardware resources of the system and to control the initialisation of activities on the perimeters (P1, P2, P3) of the system, by controlling the interoperability of the different modules and means of the system (2).

17. A system according to one of claims 12 to 16, **characterised in that** the process means (100) of the administration tool (9) of the system (2) comprise means for verifying the need for licence management mechanisms for each of the activities and means to determine the location at which the extended serial number must be recorded before the execution of the activity, these means allowing the recording of the extended serial number (SN/ext) as an activity licence, by the recording module (110), at the determined location, in the interface tables for access to the hardware resources, held in the working memories (44) of the subsystems (4A, 4B), in which the perimeters (P1, P2, P3) on which the activities are in the process of initialisation are configured.

18. A system according to one of claims 12 to 17, **characterised in that** the authentication module (106) of the subsystems (4A, 4B) on which the activities are authorised to be executed, according to the list (70) of serial numbers (SNA, SNB) of the subsystems (4A, 4B) making up the system (2), include means to compare the serial number (SNA) of the subsystem (4A) on which an activity (A1) is authorised to be executed, identified by the extended serial number (SN/ext) of the activity, with only the serial number (SNA, SNB) of the subsystem (4A, 4B) on which the activity (A1) is in the process of initialisation, so as to prevent the execution (150) of the activity on a subsystem (4B) other than that initially authorised (4A).
